# EUROPEAN PATENT APPLICATION

(11) **EP 3 711 907 A1**
(43) Date of publication of application: **23.09.2020**
(21) Application number: 19194635.9
(22) Date of filing: 30.08.2019
(51) Int. Cl.: B25J 9/16, B25J 13/08

(54) **HANDLING SYSTEM, ROBOT MANAGEMENT SYSTEM, AND ROBOT SYSTEM**

(30) Priority: 18.03.2019 JP 2019050000
(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: Ogawa, Akihito, Tokyo, 105-0023 (JP); Chiba, Yasunori, Tokyo, 105-0023 (JP); Shimoyama, Kenichi, Tokyo, 105-0023 (JP)
(74) Representative: Hoffmann Eitle

(57) **Abstract**

In an arrangement, a robot system includes a robot that has a movable part and an end effector, and that grasps and moves an object; includes a sensor that measures the object; and is capable of processing the object in a plurality of operation modes. A data analyzing unit analyzes first-type data of the object obtained by the sensor by measuring the object, and calculates second-type data of the object. A database is used to store the second-type data of the object in a corresponding manner to the state of the data of the object, which is decided according to the operation mode of the robot system at the time of obtaining the first-type data of the object. With respect to the robot system which processes the object, an operation instructing unit gives an operation instruction to process the object according to an action command decided according to the second-type data of the object in the operation mode decided according to the state of the object stored in the database.

## Description

### FIELD

Arrangements described herein relate generally to a handling system, a robot management system, and a robot system.

### BACKGROUND

Typically, a system for automating the task of handling objects is known.

[Patent Literature 1] Japanese Unexamined Patent Application Publication (Translation of PCT Application) No. 2018-504333

For example, it would be beneficial if a handling system having a new configuration with less inconvenience can be achieved, such as a handling system enabling reduction in the time and efforts required at the time of handling new items.

### BRIEF DESCRIPTION OF THE DRAWINGS

FIG. 1 is a schematic configuration diagram illustrating a handling system according to an arrangement;
FIG. 2 is a block diagram illustrating a robot integrated management system according to the arrangement;
FIG. 3 is a schematic configuration diagram illustrating a picking robot system according to the arrangement;
FIG. 4A is a schematic configuration diagram illustrating an end effector according to the arrangement;
FIG. 4B is a schematic configuration diagram illustrating another end effector, which is different than the end effector illustrated in FIG. 4A, according to the arrangement;
FIG. 4C is a schematic configuration diagram illustrating still another end effector, which is different than the end effectors illustrated in FIGS. 4A and 4B, according to the arrangement;
FIG. 4D is a schematic configuration diagram illustrating still another end effector, which is different than the end effectors illustrated in FIGS. 4A to 4C, according to the arrangement;
FIG. 4E is a diagram illustrating an example of end effector information according to the arrangement;
FIG. 5 is a block diagram illustrating a controller of the picking robot system according to the arrangement;
FIG. 6 is a state transition diagram related to the recorded state of data in an integrated item database and related to the registered state of the end effector according to the arrangement;
FIG. 7A is a diagram illustrating an example of an item information table in the integrated item database according to the arrangement;
FIG. 7B is a diagram illustrating an example of an end effector information table in the integrated item database according to the arrangement;
FIG. 8 is a flowchart for explaining a sequence of operations starting from registration of a new item to picking of that item as performed by the handling system and a sequence of operations for updating the integrated item database according to the arrangement;
FIG. 9 is a flowchart for explaining a sequence of operations performed in a photographing registration mode of the picking robot system according to the arrangement;
FIG. 10A is schematic perspective view of the end effector according to the arrangement;
FIG. 10B is an explanatory diagram illustrating suction patterns achieved using the end effector illustrated in FIG. 10A;
FIG. 10C is an explanatory diagram of an example of recognition of the items as performed by the controller of the picking robot system according to the arrangement;
FIG. 11A is an explanatory diagram illustrating items placed in a container according to the arrangement;
FIG. 11B is a flowchart for explaining an exemplary flow of operations performed in a tentative decision operation for tentatively deciding the end effector according to the arrangement;
FIG. 11C is a list illustrating data of evaluation values obtained for the items illustrated in FIG. 11A according to the arrangement;
FIG. 11D is a diagram illustrating an example of the item information table in the integrated item database according to the arrangement, and illustrating an end effector tentative decision state;
FIG. 11E is a diagram illustrating an example of the end effector information table in the integrated item database according to the arrangement, and illustrating the end effector tentative decision state;
FIG. 12 is a flowchart for explaining a sequence of operations performed in a shape registration mode of the picking robot system according to the arrangement;
FIG. 13A is a flowchart for explaining a sequence of operations performed to update item information in the integrated item database according to the arrangement;
FIG. 13B is a schematic perspective view of an item model obtained as a result of modelization in the robot integrated management system according to the arrangement;
FIG. 13C is a diagram illustrating an example of the end effector information table in the integrated item database according to the arrangement, and illustrating a state in which end effector evaluation values are assigned;
FIG. 14A is a diagram illustrating an example of the end effector information table in the integrated item database according to the arrangement, and illustrating an end effector finalization state;
FIG. 14B is a diagram illustrating an example of the end effector information table in the integrated item database according to the arrangement, and illustrating a state in which end effector compatibility and a registration state is assigned;
FIG. 15 is a flowchart for explaining a sequence of operations performed for determining the item type according to the arrangement;
FIG. 16 is a flowchart for explaining a sequence of operations performed to determine flag information indicating the attributes of an item according to the arrangement;
FIG. 17 is a flowchart for explaining a sequence of operations performed by the robot integrated management system to process an item having the end effector finalization state according to the arrangement;
FIG. 18 is a flowchart for explaining a sequence of operations performed in a normal mode of the picking robot system according to the arrangement;
FIG. 19 is a flowchart for explaining a sequence of operations performed to select the end effector according to the arrangement;
FIG. 20A is a diagram illustrating an example of the picking order for the handling system according to the arrangement;
FIG. 20B illustrates an example of primary end effectors and capable end effectors with respect to each unprocessed item specified in the picking order for the handling system according to the arrangement;
FIG. 21 is a flowchart for explaining a sequence of operations for changing the parameters in an item grasping action performed by the picking robot system according to the arrangement;
FIG. 22 is a flowchart for explaining a sequence of operations in a packing operation for packing an item as performed by the picking robot system according to the arrangement;
FIG. 23A is a schematic perspective view of items having the item type "box" in the handling system according to the arrangement;
FIG. 23B is a schematic perspective view of items having the item type "solid" in the handling system according to the arrangement;
FIG. 23C is a schematic perspective view of items having the item type "deformable" in the handling system according to the arrangement;
FIG. 23D is a schematic planar view of the container in which the items illustrated in FIGS. 23A to 23C are packed by the picking robot system according to the arrangement;
FIG. 24 is a flowchart for explaining a sequence of operations performed in a logistic system site improvement operation by the robot integrated management system according to the arrangement;
FIG. 25 is an explanatory diagram illustrating an exemplary image displayed as a logistics system improvement proposal function by the robot integrated management system according to the arrangement; and
FIG. 26 is a block diagram illustrating a hardware configuration of a computer that constitutes the robot integrated management system, a master device, slave devices, and the controller according to the arrangement.

### DETAILED DESCRIPTION

An exemplary arrangement of a handling system is described below. In the arrangement described below, the configuration and the control (technical features) are only exemplary, as well as the operations and the result (effects) attributed to the configuration and the control are only exemplary.

### Overview of handling system

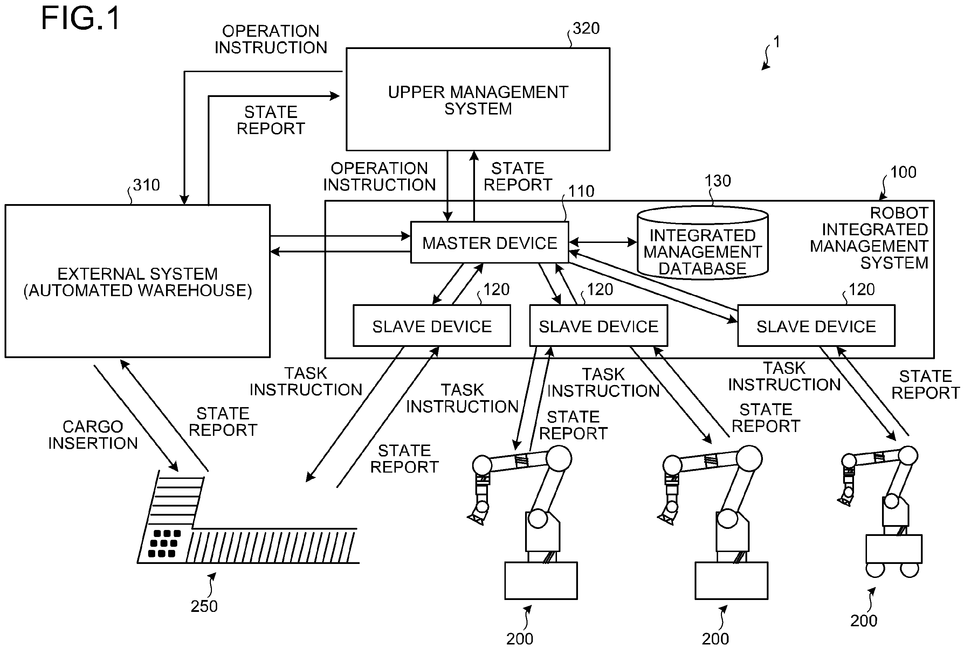

FIG. 1 illustrates an overview of a handling system 1 according to the arrangement. As illustrated in FIG. 1, the handling system 1 includes a robot integrated management system 100, an external system 310, an upper management system 320, robots 200, and a material handling machinery 250. The handling system 1 can also be called an object handling system or an item handling system.

Examples of the external system 310 include an automated warehouse and an external carrier device. Examples of the upper management system 320 include a warehouse management system, an inventory management system, and a transportation management system.

The robot integrated management system 100 is connected with the following: a plurality of robots 200 (automated robots), the material handling machinery 250 such as a conveyer system or an elevator system, an information reading-inspection system such as optical character recognition (OCR), and a sorting system (not illustrated). The robot integrated management system 100 is an example of a robot management system.

The robot integrated management system 100 integratedly coordinates with the upper management system 320, and manages and controls the connected systems and the connected devices to ensure that, at the time of transporting an object 10 from the external system 310 or at the time of transporting the object 10 to the external system 310, handling of the object 10 is performed. For example, the robot integrated management system 100 controls the robots 200 and the material handling machinery 250 in such a way that operations such as delivery, picking, packing, unloading, loading, unpacking, testing, and product inspection are performed regarding objects such as various items, manufactured goods, cargo, and boxes. Herein, an item represents an example of the object 10, and is also called an article or a physical object. Moreover, the robots 200 and the material handling machinery 250 can be collectively called a robot system.

The robot integrated management system 100 includes a master device 110, a plurality of slave devices 120, and an integrated management database 130.

The master device 110 functions as an interface between the external system 310 and the integrated management database 130. Moreover, the master device 110 performs an operation such as delivery of items among different devices such as the robots 200 and the material handling machinery 250, and also performs optimization of that operation.

Each slave device 120 is connected to the robots 200 or the material handling machinery 250, and manages or controls the devices connected thereto.

At the time of switching among the devices connected to the robot integrated management system 100, the master device 110 switches the slave devices 120 to be controlled, thereby enabling achieving minimization of the changes in the master device 110 and the integrated management database 130.

### Overview of robot integrated management system

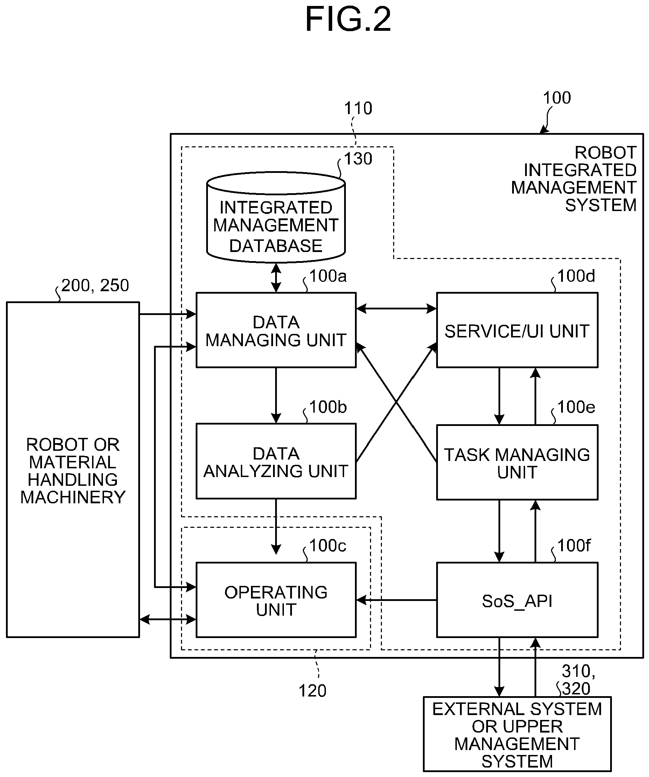

FIG. 2 illustrates an overview of the robot integrated management system 100. As illustrated in FIG. 2, the robot integrated management system 100 includes a data managing unit 100a, a data analyzing unit 100b, an operating unit 100c, a service/UI unit 100d, a task managing unit 100e, and an SoS_API 100f.

The data managing unit 100a manages database. In other words, the data managing unit 100a obtains, stores, and updates data in the integrated management database 130.

The integrated management database managed by the data managing unit 100a is called the integrated management database 130. The integrated management database 130 includes, for example, item data, robot data, end effector data, and operator data.

The item data represents the information about the items that are processed by the robots 200 and the material handling machinery 250 serving as terminals.

The robot data represents the information about the robots 200, and the end effector data represents the information about the end effectors that constitute the robots 200. Herein, an end effector 220 can also be referred to as a hand.

The operation data represents information generated during the operations of the system, such as the operation status of the robots 200 and the processing result of processing the items.

The data analyzing unit 100b obtains necessary data from the data managing unit 100a, and performs data analysis that is required in the execution of operations by the operating unit 100c. The data that is obtained as a result of the analysis performed by the data analyzing unit 100b and that is associated with the items (the objects 10) represents an example of second-type data.

The operating unit 100c performs a data updating operation and an action command operation.

In the data updating operation, based on the analysis performed by the data analyzing unit 100b, the operating unit 100c updates the data in the database by determining the success or failure of the data stored in the database and accordingly sorting out the data, and by generating new data from a plurality of sets of data.

In the action command operation, based on the analysis result obtained by the data analyzing unit 100b, the operating unit 100c performs control of the robot system or the material handling machinery 250 by: controlling the operating states of the robots 200 and the material handling machinery 250; controlling the items to be put in the robots 200 and the material handling machinery 250; modifying the robots 200 and the material handling machinery 250 according to the items to be put in; and giving instructions about operation modes to the robots 200.

The service/UI unit 100d performs input and output of data with respect to the data managing unit 100a; provides maintenance information to the outside based on the analysis performed by the data analyzing unit 100b; and provides site improvement information to the outside. Moreover, based on the information obtained from the data managing unit 100a and the data analyzing unit 100b, the service/UI unit 100d can have a function for visualizing the operating state and an operation UI function for receiving or sending operation data enabling remote-control operations.

The task managing unit 100e utilizes the data in the service/UI unit 100d and the data managing unit 100a, and implements functions such as computer aided engineering (CAE), product lifecycle management (PLM), and enterprise asset management (EAM).

The SoS_API 100f (SoS_API stands for System of Systems Application Programing Interface) provides an interface for establishing connection with external IT systems such as a warehouse management system (WMS), a manufacturing execution system (MES), and a transportation management system (TMS).

### Overview of picking robot system

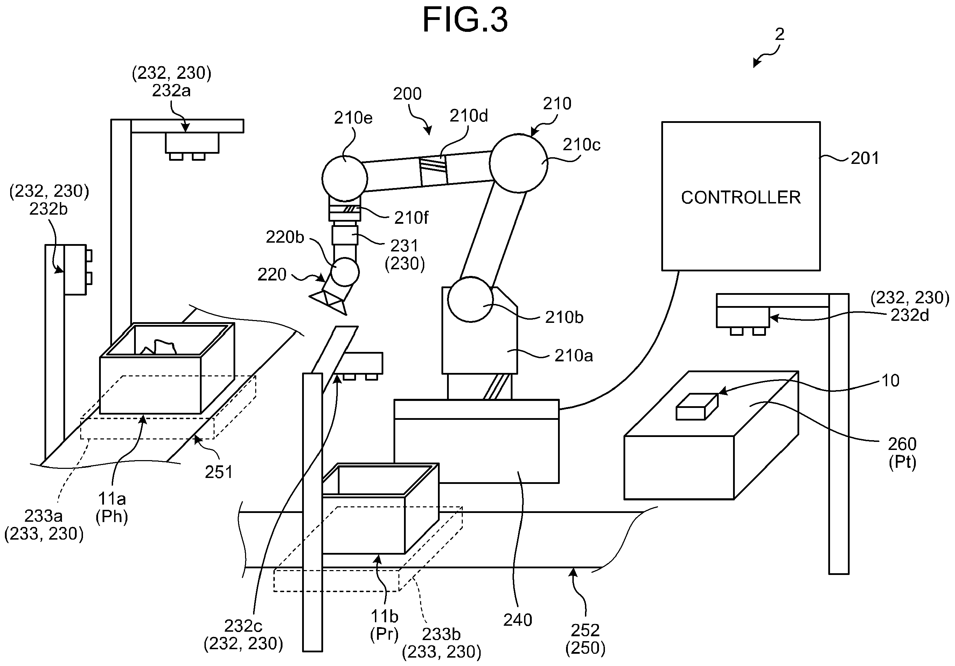

FIG. 3 is an overall configuration diagram of a picking robot system 2. The picking robot system 2 includes the robot 200, sensors 230, a housing 240, and the material handling machinery 250. The picking robot system 2 grasps the object 10 at a grasping position Ph, delivers the object 10, and releases the object 10 at a releasing position Pr. Such operations can also be called delivery of the object 10 or picking of the object 10. Moreover, the robot 200 can also be called a manipulator. Furthermore, a controller 201 can also be called a hand control device.

The robot 200 includes an arm 210 and the end effector 220.

The arm 210 is, for example, an articulated robot having a plurality of (for example, six) rotating units 210a to 210f that is rotary-driven using a servo motor. However, the arm 210 is not limited to this example, and alternatively can be a SCARA robot (SCARA stands for Selective Compliance Assembly Robot Arm) or a linear motion robot. Still alternatively, the arm 210 can be configured by combining at least two of the following: an articulated robot, a SCARA robot, and a linear motion robot. The arm 210 represents an example of a movable part. Meanwhile, the robot 200 can also be called a robot arm.

The end effector 220 includes, as an example, a suction mechanism as illustrated in FIG. 3. However, that is not the only possible case. Alternatively, for example, the end effector 220 can include a jamming mechanism, a pinching mechanism, or a multi-fingered mechanism. Still alternatively, the end effector 220 can have at least two of the following: a suction mechanism, a jamming mechanism, a pinching mechanism, and a multi-fingered mechanism. Meanwhile, the end effector 220 can also be called a hand.

The sensor 230 is represented by a force sensor 231, and can alternatively be represented by a torque sensor, a rotation sensor, or a current sensor installed in the rotating units 210a to 210f. The controller 201 can obtain the force acting upon the end effector 220 by referring to the detection value of the force sensor 231 or by performing calculation using the current value or the rotation value (the detection value of the rotation sensor) of each motor.

Moreover, as illustrated in FIG. 3, the picking robot system 2 includes a plurality of cameras 232. The cameras 232 are an example of the sensors 230 and can also be called image sensors. The cameras 232 are sensors such as RGB image cameras, or range image cameras, laser range finders, or laser imaging detection and ranging (LiDAR) that are capable of obtaining image information and distance information (three-dimensional information). Herein, the cameras 232 represent an example of an observing unit.

Moreover, the data obtained as a result of the measurement of the object performed by the sensors 230 represents an example of first-type data.

The picking robot system 2 includes, as the cameras 232, for example, a camera 232a for grasping, a camera 232b for grasping state confirmation or for calibration, a camera 232c for releasing, and a camera 232d for temporary placement.

At the grasping position Ph at which the object 10 to be grasped (discharged) is present, the camera 232a for grasping captures (photographs) images and detects the object 10 and the surrounding area. At the grasping position Ph, for example, the object 10 is placed in a container 11a for grasping, such as a container or a pallet. In that case, the camera 232a for grasping captures image and detects, partially or entirely, the inside of the container 11a. The grasping position Ph can also be called the movement start position of the object 10 or the departure position of the object 10. Meanwhile, with reference to FIG. 3, although the container 11a is placed on a container carrying unit 251 functioning as a carrier mechanism such as a belt conveyer, that is not the only possible case. The container carrying unit 251 is an example of the material handling machinery 250. Moreover, the container 11a can also be called an article container or an import container.

The camera 232b for calibration captures image and detects the object 10 at the calibration position of the object 10, which is set on the outside of the container 11a for grasping and above the grasping position Ph.

The camera 232c for releasing captures image and detects the releasing position Pr, at which the object 10 is released (imported), and the surrounding area of the releasing position Pr. At the releasing position Pr, the object 10 is housed in a container 11b for releasing, such as a container or a pallet. In that case, the camera 232c for releasing captures image and detects, partially or entirely, the inside of the container 11b. The releasing position Pr can also be called the movement end position of the object 10 or the arrival position of the object 10. Meanwhile, with reference to FIG. 3, although the container 11b is placed on a container carrying unit 252 functioning as a carrier mechanism such as a belt conveyer, that is not the only possible case. The container carrying unit 252 is an example of the material handling machinery 250. Moreover, the container 11b can also be called a consolidating container or a discharge container.

The camera 232d for temporary placement captures image and detects a temporary placement position Pt, which is in between the grasping position Ph and the releasing position Pr and at which the object 10 is temporarily placed, and the surrounding area of the temporary placement position Pt. At the temporary placement position Pt, the object 10 is placed on a temporary placement surface 260 such as a table or a stage. In that case, the camera 232d for temporary placement captures image and detects, partially or entirely, the temporary placement surface 260. The temporary placement position Pt can also be called an intermediate position or a stopover position of the object 10. Meanwhile, the temporary placement position Pt is not limited to be a placement surface.

Meanwhile, the picking robot system 2 can include, as the sensors 230, weight scales 233 for measuring the weight of the object 10. The weight scales 233 include a weight scale 233a for measuring the weight of the object 10 at the grasping position Ph and a weight scale 233b for measuring the weight of the object 10 at the releasing position Pr.

The housing 240 can be used to house various components and equipment of the picking robot system 2, such as a power-supply device meant for driving an electrical actuator such as a motor, a bottle meant for driving a fluidic actuator, a tank, a compressor, a user interface, and various safety mechanisms. Moreover, the housing 240 can also be used to house the controller 201.

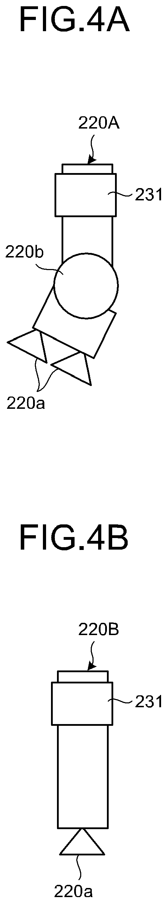

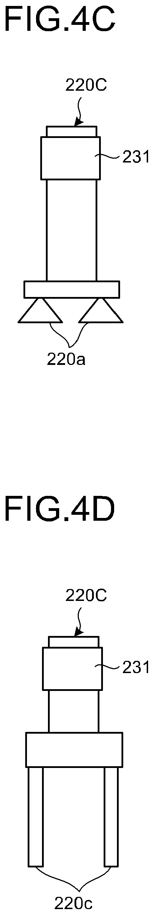

In FIGS. 4A to 4D are illustrated examples of the end effector 220 usable in the robot 200. In FIG. 4A to 4C are illustrated suction-type end effectors 220A to 220C. An end effector 220A illustrated in FIG. 4A has a bent portion 220b, but an end effector 220B illustrated in FIG. 4B and the end effector 220C illustrated in FIG. 4C do not have the bent portion 220b. The end effector 220B illustrated in FIG. 4B has a single suction pad 220a, while the end effector 220A illustrated in FIG. 4A and the end effector 220C illustrated in FIG. 4C have a plurality of suction pads 220d. Moreover, FIG. 4D illustrates a grasping-type end effector 220D, which has a pinching mechanism including a plurality of fingers 220c.

However, the end effector 220 is not limited to the examples illustrated in FIGS. 4A to 4D. For example, the end effector 220 can have an extendable mechanism. Moreover, the specifications such as the size, the count, and the positions of the suction pads 220a in the end effector 220 can be varied in various ways. The force sensor 231 can be installed at the leading end of the arm 210. Alternatively, the end effector 220 can include another sensor 230 other than the force sensor 231. Moreover, the end effector 220 can include a torque sensor for measuring the torque of the motor functioning as the actuator that moves the bent portion 220b. Furthermore, the controller 201 can detect and estimate the force acting upon the end effector 220 by referring to the current values or the encoding signals of the motor.

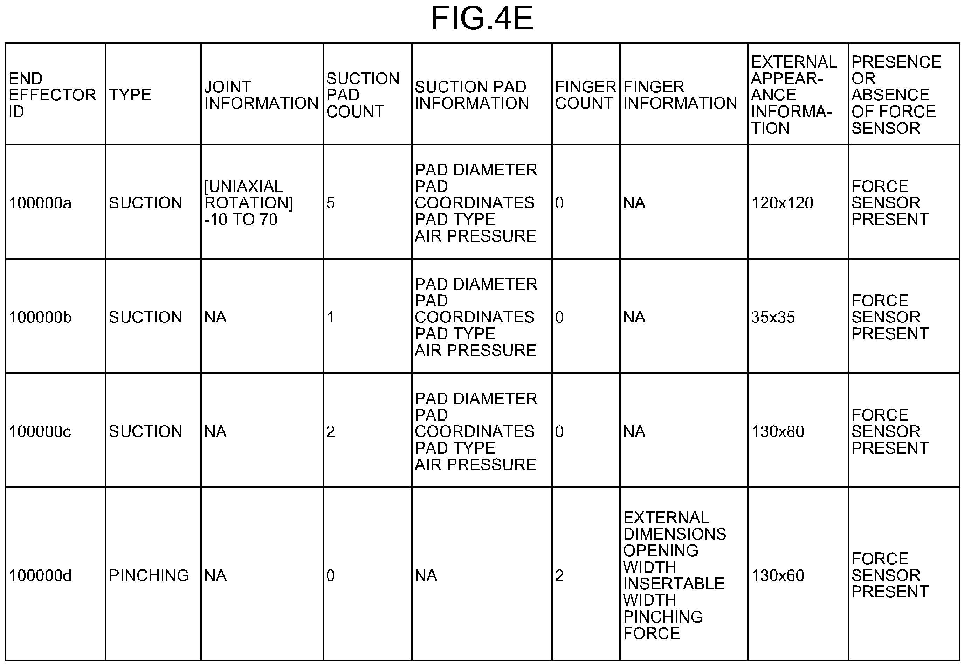

FIG. 4E illustrates an example of end effector information. Each end effector 220 has an end effector ID assigned thereto. The feature information of the end effector 220 contains the following: the type of the end effector 220, the joint information, the suction pad count, the suction pad information, the finger count, the finger information, the external appearance information, and the determination about the presence or absence of the force sensor 231. The data indicating the feature information is stored in a corresponding manner to the end effector ID in the integrated management database 130. The robot 200 is configured in such a way that a plurality of different end effectors 220 can be installed in the arm 210 in a replaceable manner. An end effector changer (not illustrated) can replace the end effector 220 in response to an instruction from the robot integrated management system 100.

### Controller of picking robot system

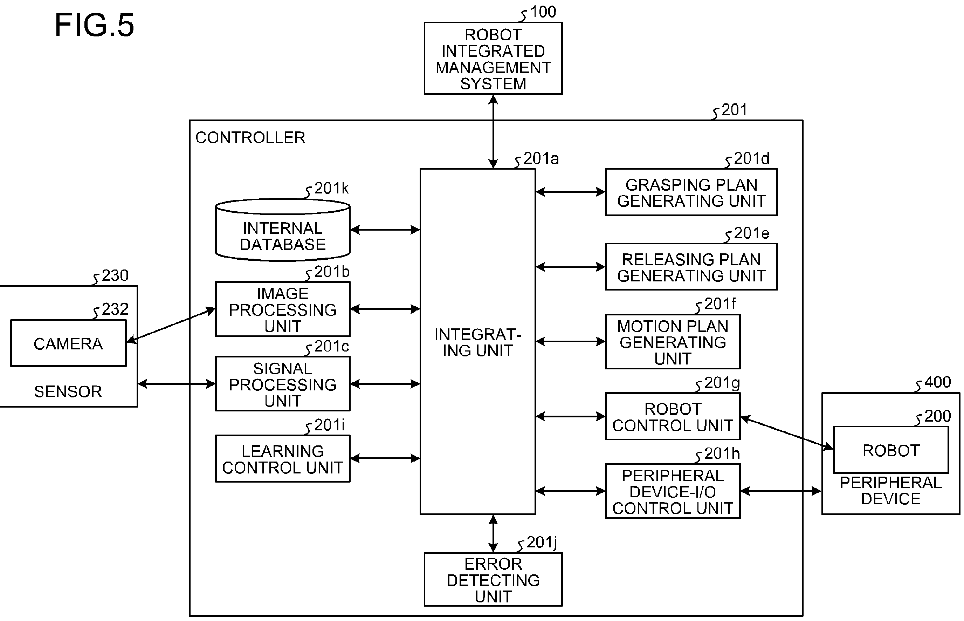

FIG. 5 is a block diagram of the controller 201. For example, the controller 201 includes an integrating unit 201a, an image processing unit 201b, a signal processing unit 201c, a grasping plan generating unit 201d, a releasing plan generating unit 201e, a motion plan generating unit 201f, a robot control unit 201g, a peripheral device-I/O control unit 201h (I/O stands for Input/Output), a learning control unit 201i, an error detecting unit 201j, and an internal database 201k. Meanwhile, the controller 201 can also be called a control device.

The integrating unit 201a generates, administers, and controls a task plan of the picking robot system 2 based on the input information obtained from the robot integrated management system 100, the state of the picking robot system 2, and the detection values obtained by the sensors 230.

The image processing unit 201b processes the images and the information (detection values) obtained from the cameras 232, and generates a motion plan and generates information required in operation control, error detection, and learning.

The signal processing unit 201c processes the information (detection values) obtained from the sensors 230, and generates a motion plan and generates information that is required in operation control and error detection.

The grasping plan generating unit 201d performs operations to calculate the grasping method by which the robot 200 would grasp the object 10, to calculate the grasping position Ph and the grasping orientation, to calculate the path and the stopover points for moving to the grasping position Ph in the grasping orientation without causing interference of the necessary parts with the surrounding environment. Herein, the necessary parts imply, for example, the entire robot 200 or some part such as the arm 210 of the robot 200. In the picking robot system 2 according to the arrangement, since it is possible to perform force control, the parts having some flexibility such as the suction pads 220a and the elastic joint parts can be allowed to make contact to some extent.

The releasing plan generating unit 201e performs operations to calculate the placement method, such as the pressing method, at the position at which the object 10 grasped by the robot 200 is to be packed or installed; and to calculate the grasping method and the releasing method, to calculate the releasing position Pr and the releasing orientation, and to calculate the path and the stopover points for moving to the releasing position Pr in the releasing orientation without causing interference of the necessary parts with the surrounding environment. Herein, the releasing plan generating unit 201e is an example of a plan generating unit. Moreover, the releasing orientation is substantially same as the grasping orientation maintained until just before releasing the object 10.

The motion plan generating unit 201f follows an instruction from the integrating unit 201a and performs operations to calculate robot action information such as the action method, the action velocity, the action path so as to ensure that the robot 200 moves to the grasping position Ph, the temporary placement position Pt, and the releasing position Pr via the movable path (stopover points) from the current position.

The robot control unit 201g controls the picking robot system 2, which includes the robots 200, according to the robot action information generated by the grasping plan generating unit 201d, or the releasing plan generating unit 201e, or the motion plan generating unit 201f and according to various operation switching instructions given by the integrating unit 201a. Moreover, the robot control unit 201g controls the robots 200 according to a variety of orientation information and locus plan information obtained from the integrating unit 201a.

The peripheral device-I/O control unit 201h controls various carrier machines and performs input/output (IO) control meant for controlling a peripheral device 400 such as a safety door; obtaining a variety of sensor information; and controlling illumination.

The learning control unit 201i controls the learning function that enables the following learning: robot model learning for achieving vibration suppression and achieving enhancement in action accuracy of the robot 200; grasping control parameter learning for achieving enhancement in the grasping capability of the robot 200; grasping database learning; and error detection learning for achieving enhancement in the implementation of the task plan. In the arrangement, during the force control, optimum values of the parameters are selected according to the situation. Such values can be manually set from the empirical values. However, if the result of machine learning is applied, operations with higher efficiency can be performed while achieving a greater degree of labor saving.

The error detecting unit 201j observes the state of the picking robot system 2, observes the implementation state of the task plan, observes the drive control state, observes the grasping of the object 10, observes the state of delivery, and accordingly detects errors. Such error detection can be performed by observing the output of the force sensor 231 or by observing the values obtained as a result of converting that output into hand-tip coordinates, by observing the result obtained as a result of passing the abovementioned values through a low-pass filter, and by determining that an error has occurred when a given value is exceeded. As a result, it becomes possible to terminate the ongoing task and to switch to a recovery operation.

The internal database 201k includes, for example, a robot database, a hand database, an item database, a grasping database, and an environment database (none illustrated).

The robot database is used to store, for example, the structure of the picking robot system 2, the dimension and the weight of each component, the moment of inertia, the operating range and the velocity of each driving unit, and the torque performance.

The end effector database is used to store, for example, the functions of the end effector 220 and information related to the characteristics of grasping performed by the end effector 220.

The item database is used to store, for example, the following information about each object 10: the name, the identification number, the category, image information of the entire screen, CAD model information, weight information, and characteristic information regarding grasping (such as soft, fragile, or deformable).

In the grasping database, for example, regarding the object 10, the following information is stored for each grasping method of the end effector 220: the graspable position, the graspable orientation, score information such as the ease of grasping, the possible pressing amount during grasping, a determination threshold value for grasping determination, and a determination threshold value for error detection. Herein, examples of the grasping method include a suction method, a parallel two-fingered method, a parallel four-fingered method, and a multi-fingered method.

The environment database is used to store, for example, workbench information to which the picking robot system 2 corresponds, and surrounding environment information indicating the operating range and surrounding obstacles O of the picking robot system 2.

The learning result obtained in the learning control unit 201i and the information of the internal database 201k are sequentially shared with the information in the integrated management database 130 of the robot integrated management system 100 that is associated with the data managing unit 100a of the robot integrated management system 100.

With such a configuration, according to the presence or absence of data and according to the volume of data in the integrated management database 130 managed by the data managing unit 100a, the operating unit 100c instructs the controller 201 to change the operation mode of the robot 200 or to replace the end effector 220. In response to the instruction, the controller 201 varies the operation details with respect to the object 10. That is, in the arrangement, the actions of the robot 200 change according to the storage state of data in the integrated management database 130.

In the handling system 1 according to the arrangement, based on the recording state of the data, in other words, based on the type of recorded data as well as based on the presence or absence of data, the status of data, and the values of data in the integrated management database 130 that is managed by the data managing unit 100a; the operating unit 100c gives an instruction to change the action mode of the robot 200 or to replace the end effector 220. Then, according to the details of the instruction, the robot 200 varies the action details with respect to the handling target (changes the robot actions with the recorded state of data in the database).

### Integrated item database and state transition

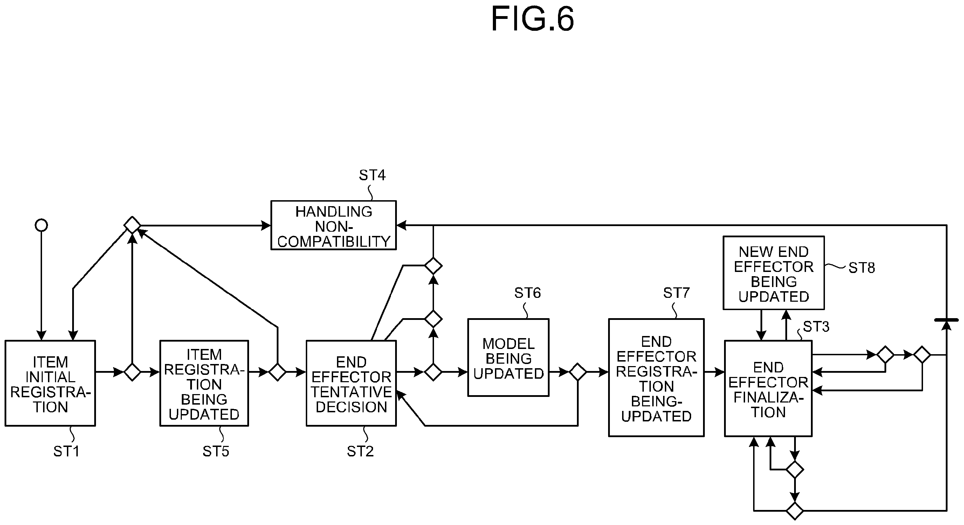

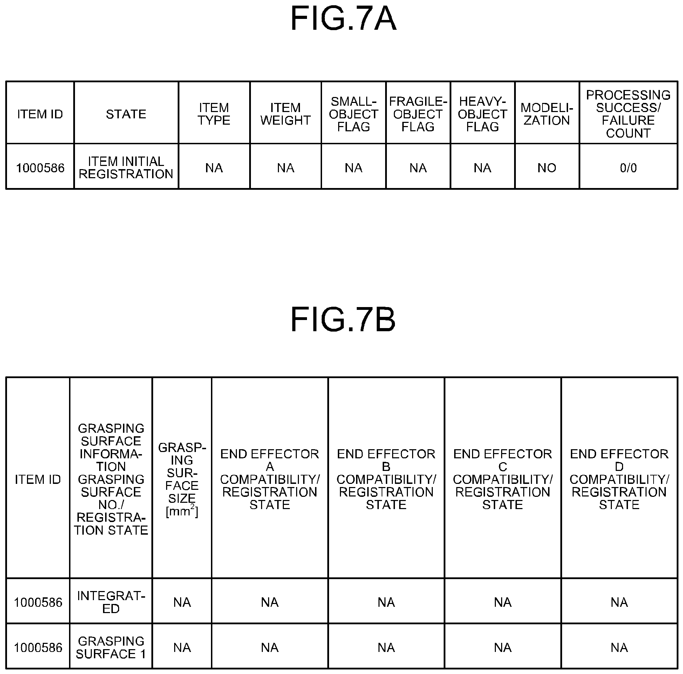

FIG. 6 illustrates a state transition diagram related to the recorded state of data in an integrated item database, which is one of the contents of the integrated management database 130, and related to the setting of the end effector 220. In FIGS. 7A and 7B are illustrated examples of records in the integrated item database. Herein, an item represents an example of the object 10 to be processed using the end effector 220. In the integrated item database, a record is generated corresponding to each item ID.

FIG. 7A is called an item information table, which includes fields of information (data) about the status, the item type, the item weight, and various handling graphs. FIG. 7B is called an end effector information table, which includes, regarding each grasping surface of an item, fields of information (data) about the size of the grasping surface and the compatibility of each end effector 220.

As illustrated in FIG. 6, the integrated item database includes following states as the fundamental states: "ST1: item initial registration state", "ST2: end effector tentative decision state", "ST3: end effector finalization state", and "ST4: handling non-compatibility". Moreover, the integrated item database includes following states as intermediate states in between the fundamental states: "ST5: item registration being-updated state", "ST6: model being-updated state", "ST7: end effector registration being-updated state", and "ST8: new end effector being-updated state". Thus, the integrated item database switches among these eight states. In the arrangement, the data managing unit 100a performs recording and rewriting of the integrated item database.

The "ST1: item initial registration state" represents the state in which the data managing unit 100a issues a new item ID to the target item for processing, and generates a new record.

The "ST2: end effector tentative decision state" represents the state in which, with respect to the target item for processing, the data managing unit 100a performs tentative registration of one or more end effectors 220 that are likely to be capable of grasping the item. The end effector tentative decision state represents an example of a first state.

The "ST3: end effector finalization state" represents the state in which the picking action for picking the target item for processing is performed for one or more times; and the data analyzing unit 100b finishes modelization such as obtaining shape information of the item, and the data managing unit 100a finalizes the end effector 220 suitable for grasping the item. The end effector finalization state represents an example of a second state.

The "ST4: handling non-compatibility" represents the state in which the data analyzing unit 100b determines that the target item for processing is difficult to be picked using the robot 200 and thus decides not to perform handling using the robot 200.

The "ST5: item registration being-updated state" represents the state in which, regarding the target item for processing, based on the information in which that item is photographed, the data analyzing unit 100b calculates and evaluates the graspability for each end effector 220 using a calculator; as well as represents the state in which the data managing unit 100a is in the middle of varying the state of the record.

The "ST6: model being-updated state" represents the state in which, based on the shape of the target item for processing as measured during a plurality of number of times of the picking action, the data analyzing unit 100b performs modelization of the item; as well as represents the state in which the data managing unit 100a is in the middle of varying the state of the record.

The "ST7: end effector registration being-updated state" represents the state in which, based on the data of the post-modelization item, the data managing unit 100a is varying the information about the end effector 220 suitable in grasping the target item for processing or the information about the end effector 220 suitable for each grasping surface of the item.

The "ST8: new end effector being-updated state" represents the state in which, based on the data of the post-modelization items and the action data indicating the success or the failure of the actual grasping, the data managing unit 100a is varying the information related to the new end effector 220.

### Picking integrated management operation

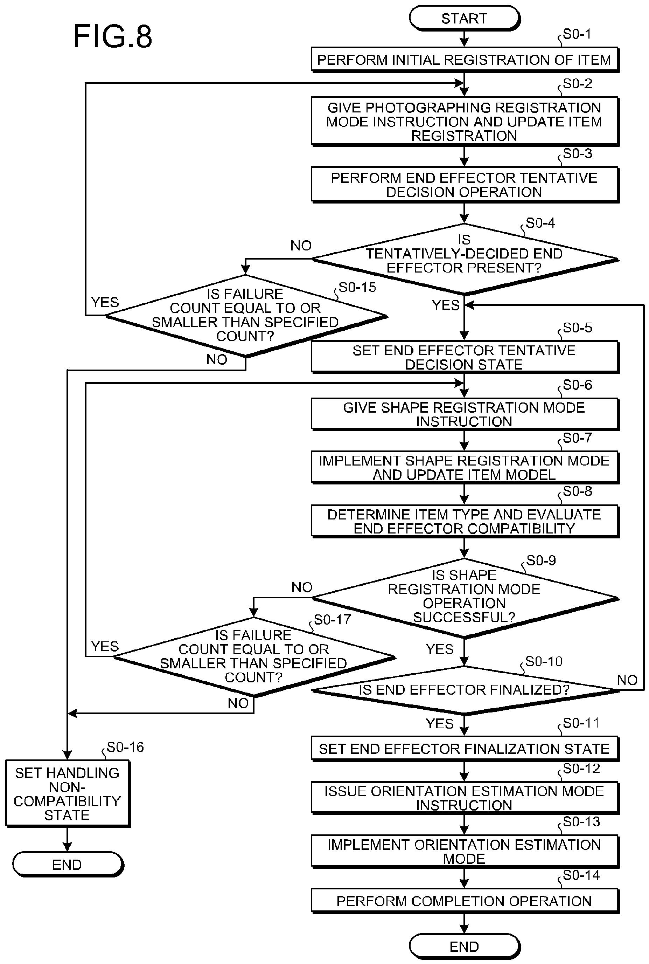

FIG. 8 is a flowchart for explaining a sequence of operations starting from registration of a new item to picking of that item as performed by the handling system 1, and a sequence of operations for updating the integrated item database.

At Step S0-1, the robot integrated management system 100 receives a picking task instruction from the external system 310, such as a WMS, via the SoS_API 100f. Then, the operating unit 100c collates the received picking task instruction data with the information about the integrated management database 130 managed by the data managing unit 100a. If the item for which the picking task instruction is given is an unregistered item, then the data managing unit 100a issues a new item ID and adds a record in the integrated item database of the integrated management database 130. At that time, the data managing unit 100a sets the field of the state of the integrated item database to the "ST1: item initial registration state".

At Step S0-2, the operating unit 100c gives an instruction for implementing a photographing registration mode to the controller of such a robot 200, from among a plurality of robots 200, that is available to receive task instructions; as well as instructs the material handling machinery 250 to move the container 11a to the container carrying unit 251 of the concerned robot 200. Upon receiving the instruction, the controller 201 performs operations according to the photographing registration mode. The operations do not include a picking action for picking the specified item by the robot 200; but include taking images of the item using the cameras 232 and creating a plan such as a grasping plan. Then, the controller 201 sends back the photographing data and the related information such as the created plan to the robot integrated management system 100. Based on the received data, the data managing unit 100a updates the record corresponding to the concerned item ID in the integrated item database. During the updating operation, the integrated item database is in the "ST5: item registration being-updated state". The photographing registration mode represents an example of an operation mode and a first mode; and a shape registration mode represents an example of the operation mode and a second mode.

At Step S0-3, the data analyzing unit 100b refers to the information about the integrated management database 130 and performs an end effector tentative decision operation for tentatively deciding on the end effector 220 that can process the concerned item. In the end effector tentative decision operation, based on the evaluation value of grasping performed by each end effector 220 corresponding to the grasping plan, the data analyzing unit 100b tentatively decides on, as primary end effectors, the end effectors 220 that are likely to be capable of grasping the item in the most stable manner; and tentatively decides on, as capable end effectors, the end effectors that have lower evaluation values than the primary end effectors but that too are likely to be capable of grasping the item.

In the end effector tentative decision operation performed at Step S0-3, if the data analyzing unit 100b determines that there is no end effector 220 which can process the item (No at Step S0-4), then the operating unit 100c increments the failure count for the photographing registration operation in the integrated item database, and the system control proceeds to Step S0-15.

At Step S0-15, if the failure count for the photographing registration operation exceeds a specified count (No at Step S0-15), then the system control proceeds to Step S0-16 at which the data managing unit 100a changes the field of the state of the concerned item to the "ST4: handling non-compatibility". It marks the end of the operations. On the other hand, at Step S0-15, if the failure count for the photographing registration operation has not exceeded the specified count (Yes at Step S0-15), then the field of the state is maintained at the "ST1: item initial registration state", and the system control returns to Step S0-2.

In the end effector tentative decision performed at Step S0-3, if the end effector 220 that can process the item is tentatively decided (Yes at Step S0-4); then, at Step S0-5, the data analyzing unit 100b changes the field of the state in the item information table to "ST2: end effector tentative decision state".

At Step S0-6, if all primary end effectors and capable end effectors that are tentatively decided are not the end effectors 220 installable in the robot 200 that is currently performing the operations, then the data managing unit 100a searches for the robot 200 in which the concerned end effectors 220 are installable, and the operating unit 100c instructs the robot 200 to which the concerned end effectors 220 are installable (in other words, another robot 200) to perform actions in the shape registration mode. Moreover, the operating unit 100c gives an instruction to the material handling machinery 250 to move the container 11a to the container carrying unit 251 of the concerned robot 200. On the other hand, if the tentatively-decided end effectors 220 are installable in the robot 200 that is currently performing the operations, the operating unit 100c instructs that robot 200 to perform actions in the shape registration mode.

At Step S0-7, the robot 200 that receives the instruction performs actions in the shape registration mode. The actions include actually picking the item using the tentatively-decided end effector that is specified. However, at that point of time, since the corresponding item data in the integrated item database is either incomplete or insufficient, the action velocity is restricted to be equal to or slower than a given velocity. Moreover, in order to understand the shape of the item in a more detailed manner, the picking robot system 2 (the controller 201) performs a more detailed measurement operation with respect to the item using the camera 232a for grasping and the weight scale 233a. In the picking action performed in the shape registration mode, the picking robot system 2 performs a grasping action for grasping the target item for processing and, when the item could be grasped, carries the grasped item in the measurable area for the camera 232b for grasping, so that the shape and the characteristics of the grasped item are measured. Subsequently, in the picking robot system 2, the grasped item is packed in the container 11b for consolidating (releasing), and the weight is measured using the weight scale 233b. Then, related information such as the picking action result and the item measurement result to the robot integrated management system 100. The data managing unit 100a refers to the received data and updates the information related to the concerned item ID in the integrated item database of the integrated management database 130. During the updating operation, the state of the integrated item database is the "ST6: model being-updated state".

At Step S0-8, the data analyzing unit 100b analyzes the data obtained as a result of the actions performed in the shape registration mode, and updates the item information. Based on the data such as the measured shape and weight, the data analyzing unit 100b performs modelization of the item and, from that information, evaluates the grasping compatibility of various types of end effectors 220 with respect to each grasping surface of the item. Then, the data managing unit 100a registers, in the integrated item database, the end effectors 220 that are capable of actually grasping the item or the end effectors 220 that are estimated to be capable of grasping the item in the most stable manner as the primary end effectors for the concerned item. Moreover, the data managing unit 100a registers, in the integrated item database, the end effectors 220 that have lower evaluation values than the primary end effectors but that too are highly likely to be capable of grasping the item as the capable end effectors for the concerned item. Furthermore, the data analyzing unit 100b determines the type of the item by analyzing the shape and the characteristic information of the item.

At Step S0-9, if the actions in the shape registration mode end up in failure, then the operating unit 100c increments the failure count for the shape registration operation; and the system control proceeds to Step S0-17.

At Step S0-17, if the failure count of the shape registration operation of all end effectors exceeds the specified count (No at Step S0-17), then the system control proceeds to Step S0-16 at which the data managing unit 100a changes the field of the state of the concerned item to the "ST4: handling non-compatibility". It marks the end of the operations. Moreover, if the failure count of the shape registration operation of the primary end effectors for the concerned item exceeds the specified count, then the data managing unit 100a sets such end effectors 220, from among the capable end effectors, that are highly likely to be capable of grasping the item in the most stable manner as the primary end effectors. Meanwhile, when the actions in the shape registration mode are successful, the data managing unit 100a increments the success count of the shape registration operation. During the updating task, the state of the integrate item database is the "ST8: new end effector being-updated state".

At Step S0-10, when the item is subjected to modelization as a result of the analysis performed by the data analyzing unit 100b and when various flags in the integrated item database and the information related to the characteristics of the item data, such as the compatibility, attain a sufficient level; the system control proceeds to Step S0-11 at which the data managing unit 100a changes the field of the state of the integrated item database to the "ST3: end effector finalization state". On the other hand, at Step S0-10, if the data of the item in the integrated item database has not attained a sufficient level, then the field of the state is maintained at the "ST2: end effector tentative decision state". Meanwhile, as a result of performing the shape registration operation, if the actions corresponding to the received picking task instruction are completed, the operating unit 100c gives a sweeping instruction to the robot 200 for sweeping out the container 11b; and the data managing unit 100a notifies the external system 310, via the task managing unit 100e and the SoS_API 100f, about the completion of the picking task.

At Step S0-12, if the picking task instruction is not yet completely processed, then the operating unit 100c instructs the picking robot system 2 (the controller 201) to perform the picking action for the next item. At that time, according to the information about the updated integrated item database, if the field of the status is the "ST3: end effector finalization state", the operating unit 100c instructs the actions in the normal mode. If the field of the status is the "ST2: end effector tentative decision state", the system control proceeds from Step S0-5 to Step S0-6 at which the operating unit 100c instructs the actions in the shape registration mode. Meanwhile, the normal mode represents an example of the operation mode and a third mode.

At Step S0-13, in the case of performing the actions in the normal mode, the robot 200 does not perform detailed measurement such as the shape measurement of the item, but only estimates the orientation of the target for grasping and performs the picking action at a faster rate. Then, as needed, the robot 200 notifies the robot integrated management system 100 about the processing-related information such as the success or failure of the picking action and the processing time. Meanwhile, the normal mode can also be called an orientation estimation mode. In the normal mode, the movement velocity of an item is set to be higher than the movement velocity of the same item in the shape registration mode.

At Step S0-14, the data managing unit 100a stores the processing results in the database. The data analyzing unit 100b and the operating unit 100c refer to the stored information and change or update the primary end effectors and the capable end effectors in accordance with the success rate of processing. Subsequently, when the container 11b becomes full, the operating unit 100c gives a replacement instruction for replacing the container 11b; and, when all ordered picking task instructions are processed, gives a sweeping instruction for sweeping out the container 11b. Moreover, the data managing unit 100a notifies the external system 310, via the task managing unit 100e and the SoS_API 100f, about the completion of the picking task.

In this way, in the handling system 1 according to the arrangement, the characteristics of the end effectors 220 are subjected to modelization, and are managed in the integrated management database 130. Moreover, the integrated management database 130 is shared among a plurality of robots 200. Hence, according to the arrangement, the robots need not perform the operations for updating the item data, and the robot integrated management system 100 updates the integrated management database 130 with the data obtained from a plurality of robots 200 having different end effectors 220. As a result, the database can be expanded in a more prompt manner.

### Actions in photographing registration mode

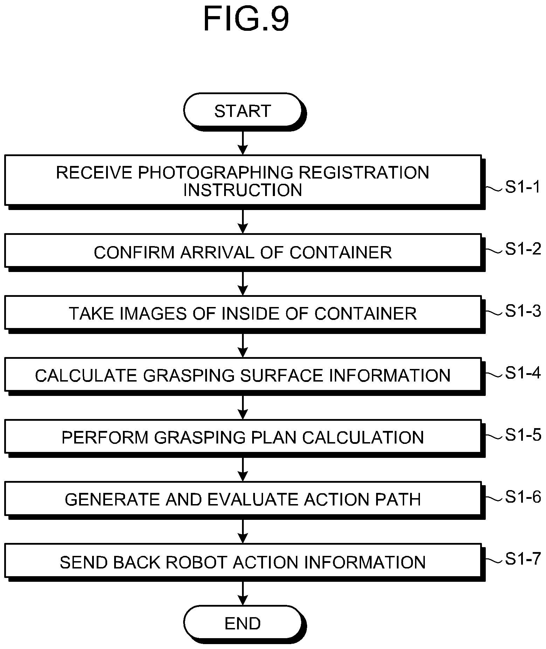

FIG. 9 illustrates a sequence of operations performed in the photographing registration mode of the picking robot system 2. The operations in the photographing registration mode of the picking robot system 2 include photographing an item (the object 10) and calculating evaluation values of the calculation of planning such as the grasping plan with respect to the conditions set in the internal database 201k of the robots 200.

At Step S1-1, when an instruction for performing operations in the photographing registration mode is received from the robot integrated management system 100, the controller 201 updates the internal database 201k.

At Step S1-2, in the picking robot system 2, the arrival of the container 11a is confirmed by the camera 232b or by a sensor such as a photoelectric sensor or a micro switch; and the camera 232b captures image of the inside of the container 11a at Step S1-3.

At Step S1-4, the image processing unit 201b determines the presence or absence of the item from the taken images, and identifies the graspable surfaces of the item. Moreover, the image processing unit 201b calculates grasping surface information such as the shape and the size of the graspable surfaces of the item, and their positions and orientations in the three-dimensional space.

At Step S1-5, the grasping plan generating unit 201d refers to the grasping surface information and performs grasping plan calculation for calculating a plurality of sets of grasping position orientation information meant for enabling the robot 200 to grasp the graspable surfaces of the item. At that time, the grasping plan calculation is performed with respect to all types of end effector models registered in the updated internal database 201k. Herein, the grasping plan generating unit 201d attaches, to the grasping position orientation information, an evaluation value indicating the stability and reliability of each grasping position orientation; and, based on the information about the surrounding environment such as about the container and the items other than the grasping target, based on the grasping surface information, and based on the information of the integrated item database, adds information such as the pressing direction and the severity of the pressing force, and the permissible movement range of the force control.

At Step S1-6, the integrating unit 201a selects the target item for grasping, the grasping position, and the grasping orientation; and the motion plan generation unit 201f generates robot action information of the robot 200 ranging from the current position to the grasping position orientation. The integrating unit 201a attaches, to the robot action information, path evaluation values such as the possibility of collision and the estimation value of the processing speed.

At Step S1-7, the integrating unit 201a notifies the robot integrated management system 100, via an external interface, about the grasping position orientation and the robot action information in all types of end effector models registered in the internal database 201k, and ends the operations performed in the photographing registration mode.

### Grasping plan

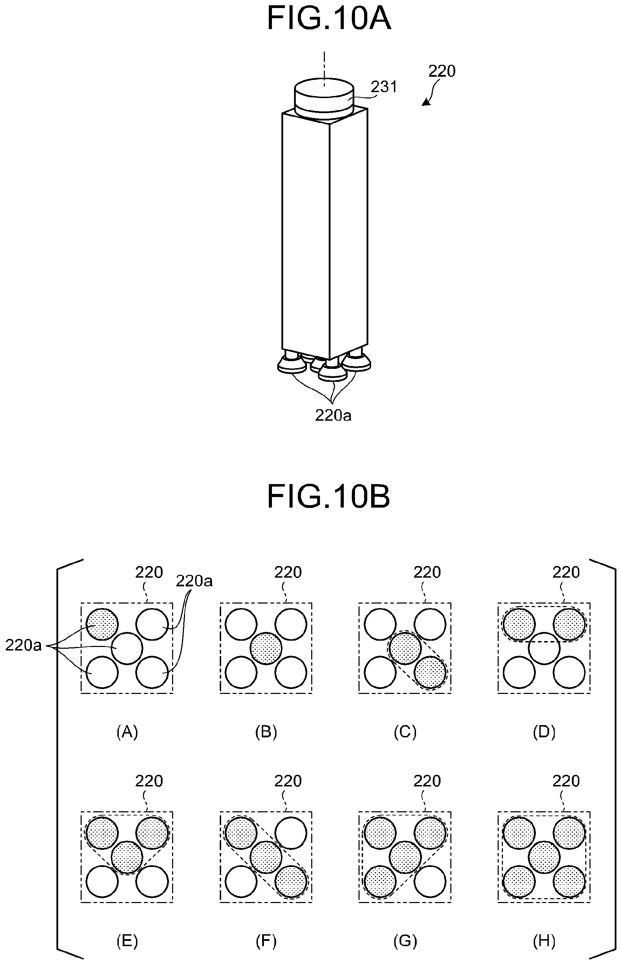

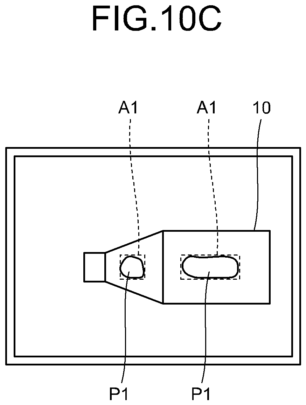

FIG. 10A illustrates an example of the end effector 220, and in FIG. 10B are illustrated suction patterns achieved using the suction pads 220a. The end effector 220 illustrated in FIG. 10A includes five suction pads 220a along the horizontal plane, and each suction pad 220a can be switched between the ON state and the OFF state for suction. Hence, as illustrated in FIG. 10B, an item can be adsorbed according to various suction patterns. With reference to FIG. 10B, circles with dot patterns represent the suction pads 220a that are switched to the ON state for suction, and white circles represent the suction pads 220a that are switched to the OFF state for suction. Moreover, the squares on the outer periphery represent the outer peripheries of the respective end effectors 220. As far as modelization of the end effectors 220 for making a grasping plan is concerned, the following information can be specified: the positions of the suction pads 220a with respect to the center of the suction face of the concerned end effector 220 (the center of the drawing, or the center of gravity), the diameter of the suction pads 220a, and the external dimensions of the end effector 220. FIG. 10C illustrates an example of image-processing-based recognition of the items placed in the container 11a based on the image processing performed by the controller 201. Herein, the areas enclosed in dashed lines represent the circumscribed quadrangles in the grasping plane that are graspable, that is, represent graspable areas A1. Inside the areas enclosed in the dashed lines, the areas illustrated by solid lines represent planes P1 that are actually measured and recognized, and are called mask information of the graspable areas A1. In the grasping plan, based on the specified end effector model, patterns (A) to (H) of the suction pads 220a are listed as illustrated in FIG. 10B. Then, regarding the mask information indicating the graspable area A1 of each graspable surface, while varying the orientation of the end factors 220, it is checked whether the area of the suction pads 220a in the ON state for suction in each listed pattern is included in the mask information.

The grasping plan generating unit 201d determines, as a graspable state, the state in which the area of the suction pads 220a in the ON state for suction is included in the mask information, and treats that pad pattern and the grasping position orientation as a grasping position orientation candidate. The grasping plan generating unit 201d can perform such determination by, for example, treating mask areas as bitmaps of 0 and 1, treating areas of the valid suction pads 220a as bitmaps of 0 and 1, and convoluting the two bitmaps. Herein, regarding the post-convolution values, of the suction pads 220a in the ON state, the portions matching with the sum of "1" in the bitmaps can be determined to be the portions included in the mask information.

Given below is the explanation of a specific example of the evaluation value indicating the stability and reliability of grasping as calculated for each grasping position orientation candidate. For example, it is believed that grasping can be done in a more stable manner in proportion to the wideness of the included area of the suction pads 220a in the ON state. Hence, greater the dimensions of the area of the suction pads 220a in the ON state, the higher is the evaluation value that is set. Moreover, the grip force can be obtained by taking product of the dimensions of the area of the suction pads 220a in the ON state and the degree of vacuum generated therein. Hence, the evaluation can be set to be higher in proportion to the ratio of the grip force with respect to the weight of the target item for grasping. Furthermore, it is believed that grasping can be done in a more stable manner in proportion to the closeness of the grasping position to the center of gravity of the object. Hence, the evaluation value can be set to be higher in proportion to the center of gravity of the grasping position (the center of the drawing). Moreover, by taking into account the possibility of collision of the end effector 220 with surrounding objects while grasping the item, the evaluation value can be set to be higher in proportion to the distance between the outer periphery (outer side) of the end effector 220 and the surrounding objects. Meanwhile, herein, although the explanation is given about the suction-type end effectors 220, a grasping plan can be created in an identical manner regarding the multi-fingered end effectors 220 as given in <https://www.jstage.jst.go.jp/article/jrsj1983/9/1/9_1_85/_pd f/-char/ja> (in Japanese). In that case, the evaluation value can be set to be higher in proportion to the narrowness of the opening width of the fingers 220c or in proportion to the contact area of the fingers 220c.

Regarding such a grasping plan operation, as long as the model of the end effectors 220 is registered, a grasping plan can be created also for the end effectors 220 that are not actually installed in the handling system and for the non-replaceable end effectors 220 that are not replaceable with the end effectors 220.

### End effector tentative decision operation

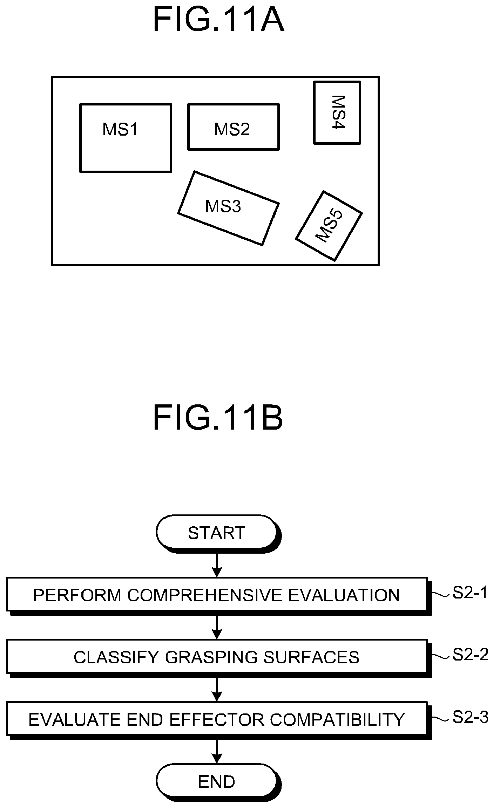

FIG. 11A illustrates a plurality of items of the same type placed in the container 11a. FIG. 11B illustrates an exemplary flow of operations performed in the tentative decision operation. At Step S2-1, the data analyzing unit 100b performs grouping or clustering of the detected measurement results of the grasping surfaces for the purpose of tentatively deciding the end effectors (i.e., performing a comprehensive evaluation). That can be performed by doing matching with given conditions, or by referring to statistical evaluation, or by using machine learning such as a deep neural network.

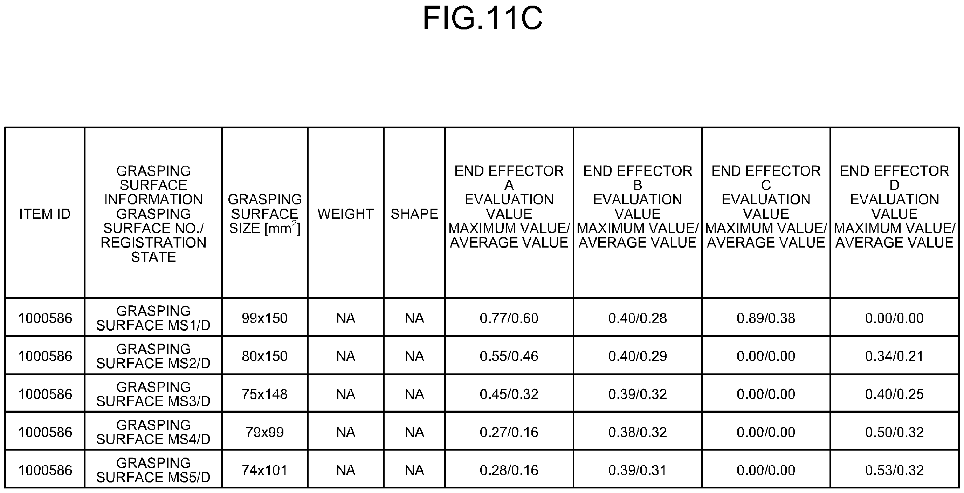

FIG. 11C illustrates a list of evaluation values obtained as a result of performing operations in the photographing registration mode regarding the items illustrated in FIG. 11A. Herein, the review is performed about the evaluation values of the items of the same type. Hence, the items (the objects 10) that are housed in the container 11a as illustrated in FIG. 11A are all identical items of the same type and have the same item ID. In the list illustrated in FIG. 11C, regarding four different end effectors 220A to 220D (220) illustrated in FIGS. 4A to 4D, respectively; the maximum evaluation value and the average evaluation value based on the grasping plan for each of the end effectors 220 is recorded for each measured grasping surface. Meanwhile, since these operations represent the measurement result, the data registration state has a label "D" indicating the measurement result assigned thereto.

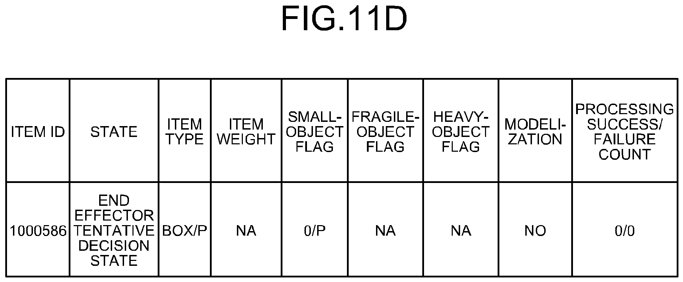

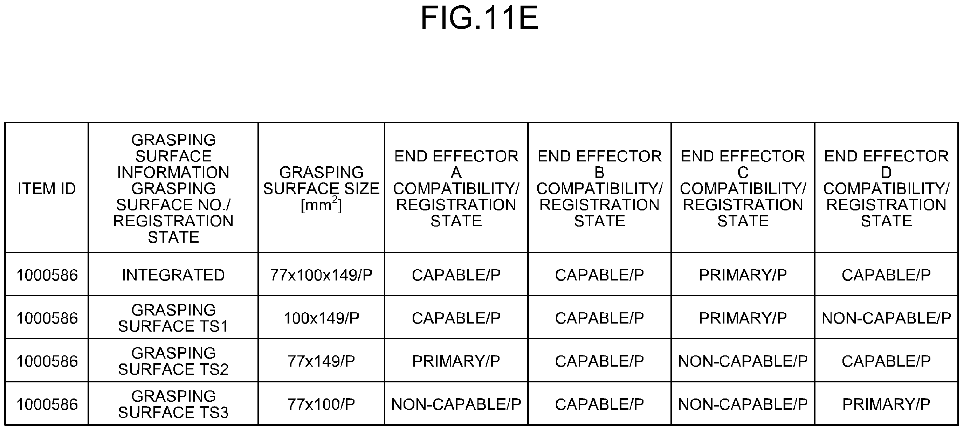

FIG. 11D illustrates item information of the integrated item database included in the integrated management database 130. FIG. 11E illustrates end effector information of the integrated item database. In the examples illustrated in FIGS. 11D and 11E, since the data analyzing unit 100b classifies the item (the object 10) as a cuboid having different lengths for three sides, the item type in the item information illustrated in FIG. 11D indicates the "box" type. Moreover, since the data analyzing unit 100b determines that the item has a sufficiently large size, a small-object flag in the item information illustrated in FIG. 11D is set to "0" indicating that the item is not a small object.

Subsequently, at Step S2-2 illustrated in FIG. 11B, the data analyzing unit 100b classifies the measurement results of the grasping surfaces. Herein, the data analyzing unit 100b classifies the measurement results of a plurality of grasping surfaces into the three faces of the cuboid that have different sizes, and assigns identification numbers to the measurement results.

At Step S2-3, the data analyzing unit 100b evaluates the compatibility of the end effector 220, records end effector information, and ends the operations. Herein, since the operations in the end effector tentative decision operation represent provisional evaluation, a label "P" indicating the tentative decision is recorded in the registration state of each set of data.

In the compatibility evaluation performed at Step S2-3, the end effectors 220 expected to be graspable and the end effectors 220 expected to be non-graspable can be classified using a given standard of evaluation values. For example, regarding the grasping surfaces having the evaluation value to be equal to or smaller than 0.3, the data analyzing unit 100b assumes that the possibility of non-graspability is high and sets the end effector compatibility to "non-capable". On the other hand, regarding the grasping surfaces having the evaluation value to be greater than 0.3, the data analyzing unit 100b assumes that the grasping surfaces are graspable and sets the end effector compatibility to "capable". Moreover, the data analyzing unit 100b sets the capable end effector having the largest maximum evaluation value for each grasping surface as the "primary". For example, when a grasping surface TS2 is classified into a grasping surface MS2 and when an end effector "c" represents the end effector 220 having the largest maximum evaluation value with respect to the grasping surface TS2, the data analyzing unit 100b determines that the end effector "c" is "primary" with respect to the grasping surface TS2. In an identical manner, when the grasping surface TS2 is classified into grasping surfaces MS2 and MS3 representing measurement data and when an end effector "a" represents the end effector 220 having the largest maximum evaluation value with respect to the grasping surface TS2, the data analyzing unit 100b determines that the end effector "a" is "primary" with respect to the grasping surface TS2. Lastly, as the comprehensive evaluation, regarding any end effector 220 in which any one grasping surface is considered to be "capable" or "primary", the data analyzing unit 100b sets the overall compatibility of that end effector 220 to "capable". If all grasping surfaces are considered "non-capable", then the data analyzing unit 100b sets the overall compatibility of each such end effector 220 to "non-capable", and sets the overall compatibility of the end effector 220 having the largest maximum evaluation value to "primary". Herein, the determination of "primary", "capable", and "non-capable" is explained with reference to the maximum evaluation value. The method of using the maximum value is characterized by simple and speedy processing. Alternatively, there are times when more accurate determination can be performed using statistical evaluation such as using the average value; or combining the maximum value, the minimum value, and the average value; or taking into account the dispersion and the outliers among a plurality of sets of data; or using clustering; or can be performed using machine learning such as a deep neural network.

### Operations in shape registration mode

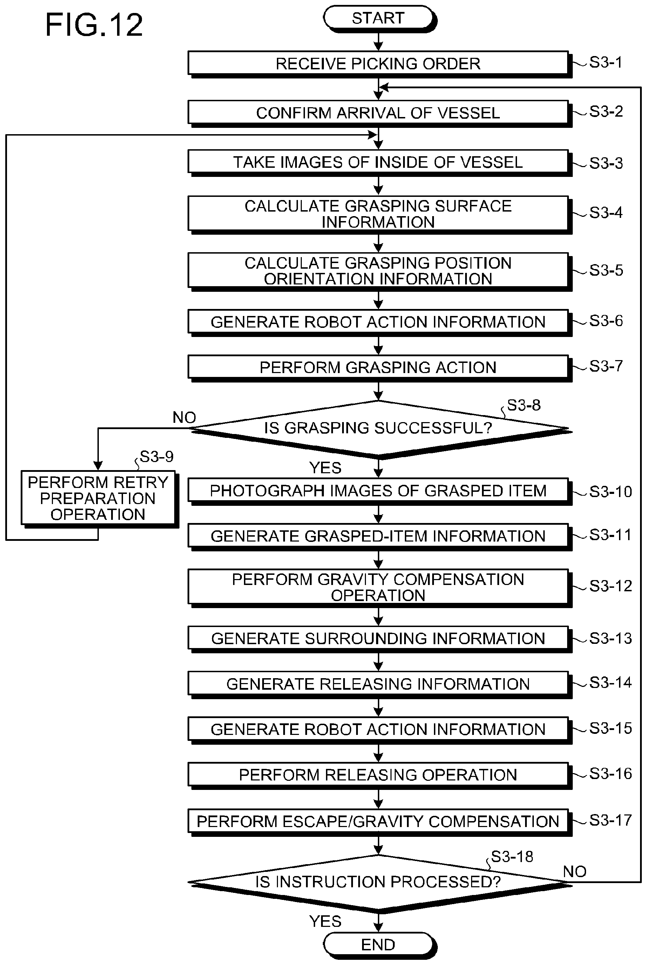

FIG. 12 illustrates a sequence of operations performed in the shape registration mode of the handling system 1. In the operations in the shape registration mode, the picking robot system 2 performs a grasping action for grasping the object 10. At that time, the picking robot system 2 (the controller 201) performs measurement of the item (the object 10) using the camera 232a for grasping, the camera 232b for calibration, the camera 232c for releasing, the camera 232d for temporary placement, and the weight scales 233.

Firstly, at Step S3-1, the integrating unit 201a receives an item delivery instruction (a picking order) from the external system 310 via an external interface.

At Step S3-2, the integrating unit 201a uses the sensors 230 such as the camera 232a, or uses a photoelectric sensor or a micro switch; and detects the arrival of the container 11a at the grasping position Ph.

At Step S3-3, the integrating unit 201a controls the camera 232a in order to take images of the grasping position Ph of the item and the surrounding area, such as the inside of the container 10a in which the item is housed.

At Step S3-4, from the images taken by the camera 232a, the image processing unit 201b determines the presence or absence of the item and identifies the graspable surfaces of the item. Moreover, the image processing unit 201b calculates grasping surface information such as the shape and the size of the graspable surfaces of the item, and their positions and orientations in the three-dimensional space.

At Step S3-5, based on the grasping surface information, the grasping plan generating unit 201d calculates a plurality of sets of grasping information meant for enabling grasping of the graspable surfaces of the item by the robot 200. The grasping information contains grasping position information and grasping orientation information. Herein, based on the surrounding information of the grasping position Ph such as other objects (surrounding components) other than the concerned item in the container 11a and based on the grasping surface information and the information of the item database; the grasping plan generating unit 201d calculates, for example, additional information, such as the movement direction of the end effectors 220, the severity of the pressing force, and the permissible movement range at the time of performing force control (described later), and adds the additional information to the grasping information.

At Step S3-6, based on the grasping information, the integrating unit 201a selects or decides on the item to be grasped, the grasping position Ph, and the grasping orientation. Then, the motion plan generating unit 201f generates robot action information ranging from the current position of the robot 200 to the grasping position Ph and the grasping orientation. The integrating unit 201a selects faster actions in the areas in which there is no risk or a relatively low probability of interference or collision between the robot 200 and the objects other than the item. On the other hand, for example, the integrating unit 201a selects slower actions in the areas in which there is a risk or a relatively high probability of interference or collision of the end effector 220 or the item with the objects other than the item when the end effector 220 approaches or enters the container 11a. Moreover, the motion plan generating unit 201f decides on the target value of the force to be generated in the end effector 220 within that area. In that case, in the shape registration mode, since the weight of the item is indeterminate, the motion plan generating unit 201f can set the action velocity to be at the lower limit of the velocity variable range.

At Step S3-7, the robot control unit 201g performs operations according to the robot action information and controls the robot 200 and the end effector 220 in order to grasp the item at the grasping position Ph and in the grasping orientation. In the surrounding area of the grasping position Ph of the item, a pressing action for pressing the end effector 220 is performed only with the force control; and, once the suction pads 220a or the fingers 220c have made a sufficient contact with the item, a grasping action such as suction or pinching is performed. In the surrounding area of the grasping position Ph, if the end effector 220 collides with an obstacle such as an object other than the item, the robot control unit 201g performs a given operation by which, for example, the end effector 220 moves away from the obstacle according to the target value of the force. Moreover, also when the target surface for grasping has an unexpected inclination, the robot control unit 201g performs an operation of making the end effector 220 trace the target surface for grasping using a given pressing method or pressing force.

The robot control unit 201g and the integrating unit 201a monitor the actions of the robot 200 and monitor the grasped state of the item that is grasped by the end effector 220. At Step S3-8, if the grasping of the item by the end effector 220 is successful (Yes at Step S3-8), the system control proceeds to Step S3-10. However, at Step S3-8, if grasping of the item ends up in failure (No at Step S3-8); then the system control proceeds to Step S3-9.

At Step S3-9, the integrating unit 201a performs retraction of the robot 200 or performs a retry preparation operation such as registration of information indicating grasping failure in the item database. After the operation at Step S3-9, the system control returns to Step S3-3.

At Step S3-10, the robot control unit 201g controls the robot 200 in such a way that the item in the grasped state on account of being grasped by the end effector 220 moves to a photographable position. Then, the integrating unit 201a controls the camera 232b so that the end effector 220 that has grasped the item is photographed at the photographable position.

At Step S3-11, from the images taken by the camera 232a for grasping or the camera 232b for calibration, the image processing unit 201b measures and generates grasped-item information such as the relative position of the item with respect to the end effector 220, the relative orientation of the item with respect to the end effector 220, and the state and the shape of the item. Moreover, from the measurement result obtained by the weight scale 233a that is installed at the grasping position Ph, the signal processing unit 201c can calculate the difference in the weights before and after the lifting of the item, and accordingly can measure the weight of the item.

At Step S3-12, the integrating unit 201a performs a gravity compensation operation such as resetting the force sensor 231. Herein, if the next releasing orientation is already decided, then the integrating unit 201a sets the orientation of the end effector 220 to be same as or close to the releasing orientation, and then performs the gravity compensation operation. As a result, the gravity compensation operation can be performed with high accuracy. At that time, the integrating unit 201a can also measure the weight of the grasped item using the force sensor 231.

At Step S3-13, the integrating unit 201a controls the camera 232b in order to take images of the inside of the container 11b. Then, from the images taken by the camera 232b, the image processing unit 201b determines the presence or absence of other objects, other than the item, at the releasing position Pr and its surrounding; as well as generates surrounding information indicating the sizes, the positions, and the surface positions of the other objects.

At Step S3-14, the releasing plan generating unit 201e refers to the grasped-item information, the grasping database information, and the surrounding information; and generates releasing information containing the releasing method, the releasing position, the releasing orientation, the stopover positions, and the stopover orientation in regard to releasing the item grasped by the robot 200. The releasing plan generating unit 201e can further add, to the releasing information, the pressing direction and the severity of the pressing force of the end effector 220 associated with the force control, and information such as the permissible movement range in the force control.

At Step S3-15, the integrating unit 201a selects the releasing position and the releasing method, and the motion plan generating unit 201f generates robot action information ranging from the current position of the robot 200 to the releasing position orientation thereof. Herein, in the areas in which there is no risk or a relatively low probability of interference or collision of the robot 200 with the surrounding objects, the integrating unit 201a selects as fast actions as possible by taking into account the grasped-item information such as the weight of the grasped item, the information about the grasping database, and the grasping state. On the other hand, for example, the integrating unit 201a selects slower actions in the areas in which there is a risk or a relatively high probability of interference or collision of the end effector 220 or the item with the objects other than the item when the end effector 220 or the grasped item approaches or enters the container 11b. Moreover, based on the releasing information, the integrating unit 201a decides on the target value of the force to be generated in the end effector 220 within that area.

At Step S3-16, the robot control unit 201g performs operations according to the generated robot action information, and controls the robot 200 and the end effector 220 in such a way that the item is released at the releasing position Pr and in the releasing orientation. In order to place the items at a high density in the container 11b, if the wall of the container 11b or a sufficiently large already-placed luggage is present near the arrival position of the item, then a pressing action is performed on the grasped item by the end effector 220. In the surrounding area of the releasing position Pr, if the end effector 220 or the grasped item collides with an unexpected obstacle such as an already-placed object, the robot control unit 201g performs a given operation by which, for example, the end effector 220 moves away from the obstacle according to the target value of the force. Moreover, also when the target surface for grasping has an unexpected inclination, the robot control unit 201g performs an operation of making the end effector 220 trace the target surface for grasping using a given pressing method or pressing force. Moreover, also when the target surface for pressing has an unexpected inclination, the robot control unit 201g performs an operation of making the grasped item trace the target surface for pressing, such as the wall of the container 11b, using a given pressing method or pressing force, and performs an operation of releasing the grasped item in the appressed state.

At Step S3-17, after the item is released, the robot control unit 201g controls the end effector 220 to enable it to get out of the container 11b, and controls the robot 200 that takes a standby orientation. At that time, the robot control unit 201g performs gravity compensation such as resetting the detection value of the force sensor 231 (in this state, the detection value is set to "0"). Herein, if the grasping orientation of the next item is already decided, then the robot control unit 201g controls the robot 200 and the end effector 220 in such a way that the end effector 220 has the orientation to be substantially same as or close to the grasping orientation, and then performs gravity compensation in that state.

At Step S3-18, when the integrating unit 201a receives a picking order from the external system 310 for picking the next item (No at Step S3-18), the system control returns to Step S3-2 and the series of control is started with respect to the next item. Meanwhile, at Step S3-18, if the next item is not present (Yes at Step S3-18); then it marks the end of the series of control.

Herein, although the explanation is given for the operation of measuring the shape of the item using the sensor 230 for grasping such as the camera 232a, the shape of the item can alternatively be measured using the sensor 230 for tentative placement such as the camera 232d. In that case, the robot 200 makes the end effector 220 move the grasped item to the tentative placement position Pt. At the tentative placement position Pt; devices such as a revolving table, a scanner, and the weight scales 233 are installed so that the data regarding the shape and the weight of the item can be obtained at the tentative placement position Pt. When the operation of obtaining the data of the item is completed, the item placed at the tentative placement position Pt is grasped by the end effector 220, is moved into the container 11b by the robot 200, and is released inside the container 11b by the end effector 220. It marks the end of the series of control.

Item information updating operation: categorization of items

In the operations performed in the photographing registration mode, the shape and the characteristic information of the item is extracted from the photographing information. However, in such a situation, because of the occlusion attributed to the wall of the container 11a or the overlapping of items, there are times when the overall information of the items cannot be obtained. On the other hand, in the operations performed in the shape registration mode, in the state in which the item is lifted or is placed at the tentative placement position Pt, the overall information containing the hidden areas in the container 11a can be photographed and measured using the lone item. In that regard, in the item information updating operation, tentative information generated based on the information obtained in the operations in the photographing registration mode is updated with the information obtained in the operations in the shape registration mode.

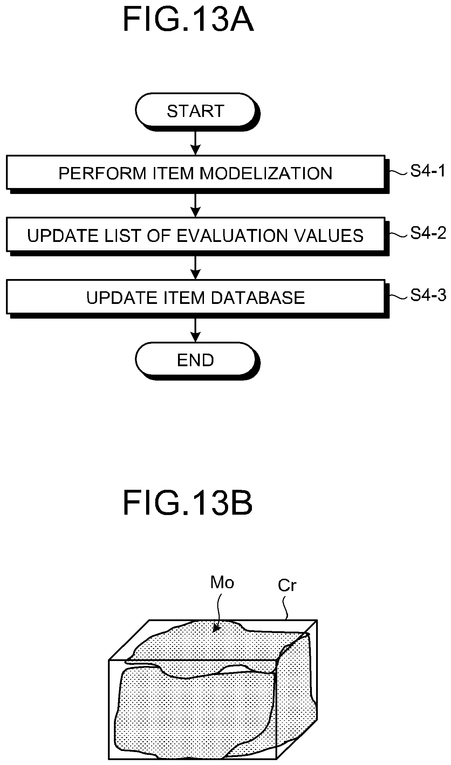

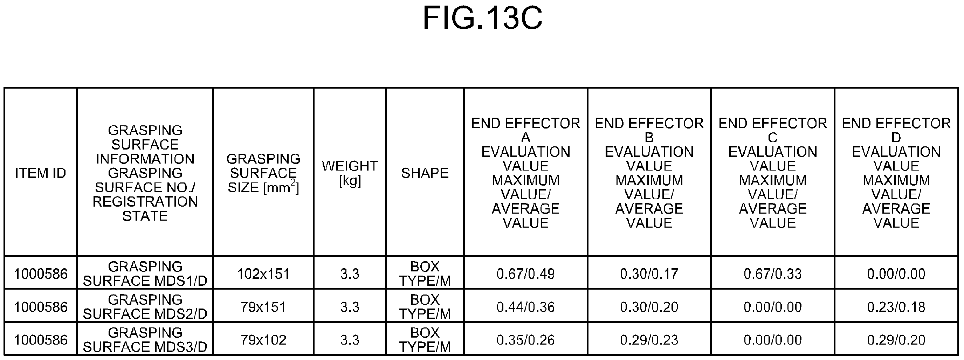

FIG. 13A illustrates a sequence of operations performed in the item information updating operation. FIG. 13B illustrates an item model, and FIG. 13C illustrates a list of evaluation values. Firstly, at Step S4-1, the data managing unit 100a generates, from a variety of data obtained during the operations in the shape registration mode, the item model as illustrated in FIG. 13B, and generates the list of evaluation values as illustrated in FIG. 13C. In FIG. 13B, solid lines Cr represent a circumscribed cuboid of the item, and a dot pattern area Mo represents three-dimensional model data.

At Step S4-2, according to the information subjected to modelization, the data managing unit 100a updates the list of evaluation values illustrated in FIG. 11B with the list of evaluation values illustrated in FIG. 13C. Herein, as the registration state of each grasping surface, "M" is recorded indicating modelization, and the size of each grasping surface is updated according to the result of modelization. Moreover, the weight information is recorded based on the measurement result, and the shape information is registered as box type. Furthermore, the evaluation value of each hand is recalculated and updated based on the post-modelization information.

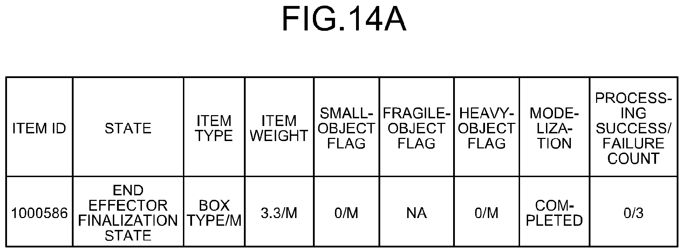

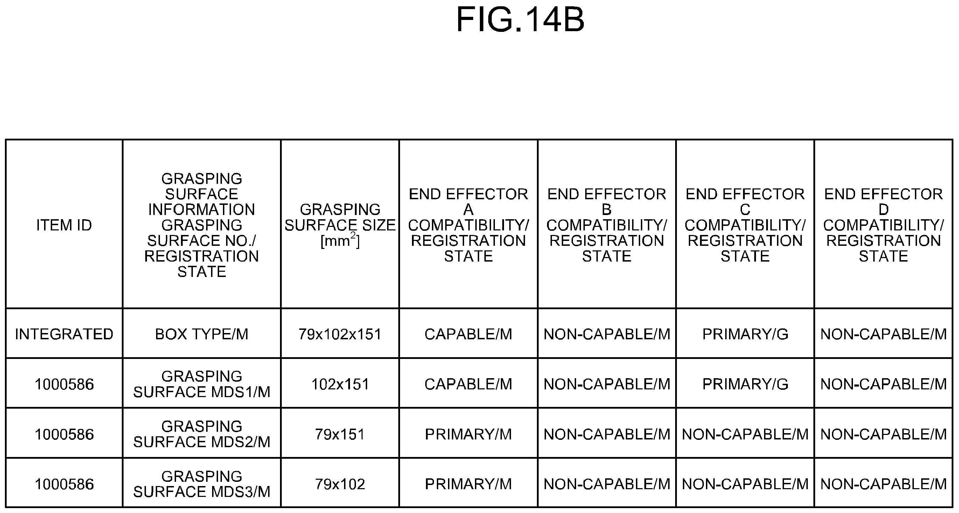

At Step S4-3, the data managing unit 100a updates the integrated item database. FIG. 14A illustrates item information of the integrated item database. As the item type, the box type is registered based on the post-modelization analysis result. As the item weight, the measured value is registered upon confirmation based on the measurement result and the modelization. The concerned classification method is explained later in detail. Meanwhile, along with updating the post-modelization information, the data managing unit 100a updates the small-object flag and a heavy-object flag. FIG. 14B illustrates the end effector information of the integrated item database. As the registration state of the grasping surface information, "M" is recorded indicating that updating is performed based on the post-modelization information. Moreover, according to the list of updated evaluation values, the data managing unit 100a updates the compatibility of each end effector 220. Herein, regarding the compatibility of a grasping surface MDS1, since the result indicates that the surface was actually grasped and that the grasping was successful, "G" is recorded as the registration state indicating that the grasping was successful.

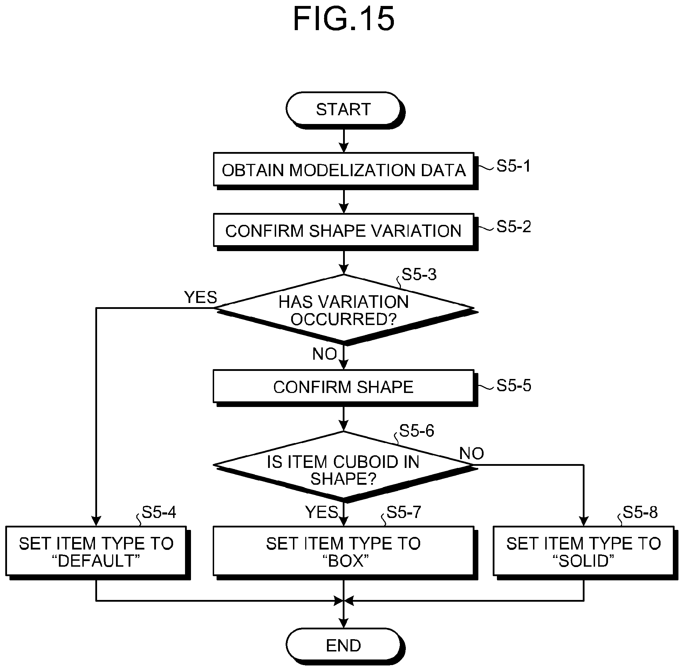

FIG. 15 illustrates a sequence of operations performed for determining the item type. Firstly, at Step S5-1, the data analyzing unit 100b obtains modelization data. At Step S5-2, the data analyzing unit 100b obtains information related to the shape variation from the modelization data, and confirms the shape variation. The shape variation can be confirmed by measuring the shape variation at the time of grasping (at the time of picking or at the time of suction) or at the time of transportation (at the time of directional change, or at the time of variation in acceleration, or at the time of arrival to the last point); by measuring the shape variation during the measurement in the shape registration mode; and by referring to the difference or variation in the result of the operations performed in a plurality of instances of the shape registration mode.

At Step S5-3, the data analyzing unit 100b performs determination regarding the shape variation. For example, at Step S5-3, if the shape variation, such as the amount of deformation with respect to the external force of given severity is determined to be equal to or greater than a threshold value (Yes at Step S5-4), then the system control proceeds to Step S5-4. At Step S5-4, the item type is set to default, and it marks the end of the operations.

On the other hand, if it is determined at Step S5-3 that the shape variation is smaller than the threshold value (No at Step S5-4), then the system control proceeds to Step S5-5, at which the data analyzing unit 100b confirms or classifies the shape. Herein, the classification can be performed by doing matching with given templates.

At Step S5-6, the data analyzing unit 100b determines whether or not the shape is substantially cuboid. If it is determined at Step S5-6 that the shape is substantially cuboid, such as if each surface is present within a given three-dimensional range close to a cuboid (Yes at Step S5-6), then the system control proceeds to Step S5-7. At Step S5-7, the data managing unit 100a registers "box" as the item type, and it marks the end of the determination of the item type.

At Step S5-6, if it is determined that the shape is not the abovementioned given cuboid (No at Step S5-6), then the system control proceeds to Step S5-8, at which the data managing unit 100a sets "solid" as the item type, and it marks the end of the determination of the item type.

In the present written description, "box" implies that item has a substantially cuboid shape, and "solid" implies that the item is hard to undergo shape variation and is not substantially cuboid. Moreover, "deformable" implies that the item is an article of clothing or a soft bag having an uncertain shape. In the case of a cuboid item represented by "box", a packing algorithm represented by the BL method can be implemented with relative ease. In the case of an item that is hard to undergo shape variation as represented by "solid", the measurement result and the model information registered in the database can be used to calculate the packing plan with relative ease. In the case of an item having an uncertain shape as represented by "deformable", the packing needs to be carried out by taking into account the fact that the item itself traces the surrounding shape. In this way, in the handling system 1 according to the arrangement, as a result of classifying the items by taking into account the post-picking packing, a more efficient handling operation can be performed. Herein, "box", "solid", and "deformable" represent examples of the classification of the items according to the deformation volume (deformability) with respect to the external force of given severity and according the external shape. As an example, the data analyzing unit 100b analyzes whether an item is substantially cuboid in regard to the external shape, and accordingly classifies the item. However, the shape is not limited to the cuboid shape. Alternatively, for example, the analysis and classification can be performed based on whether or not an item is a thin quadrangular plate or has some other shape such as a cylindrical shape or a columnar shape. Still alternatively, the items can be classified by doing matching with various shapes.

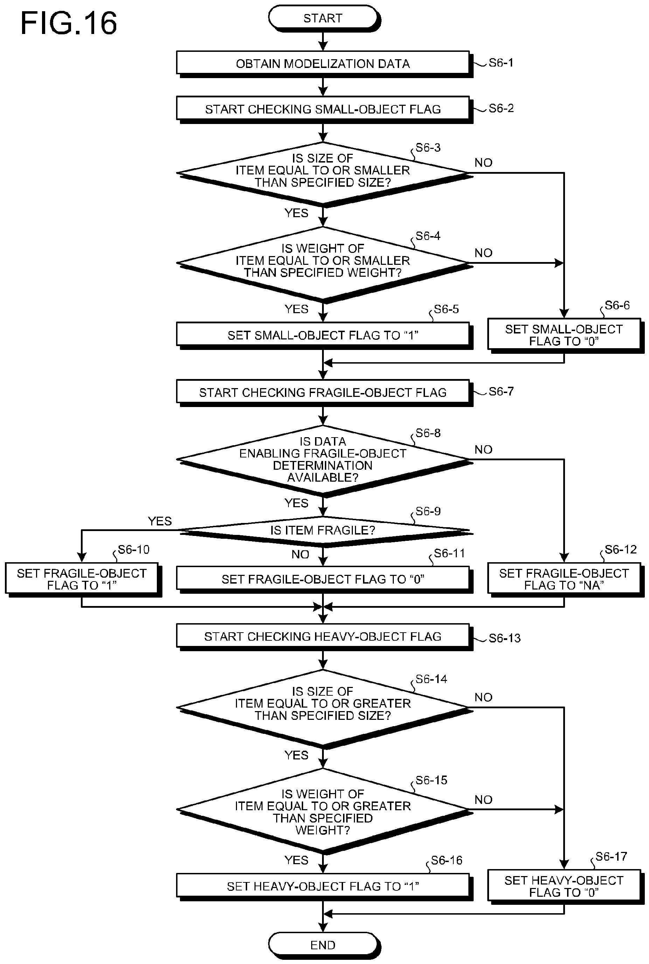

FIG. 16 illustrates a sequence of operations performed to determine flag information indicating the attributes of an item. At Step S6-1, the data analyzing unit 100b obtains post-modelization data from the integrated item database.

At Step S6-2, based on the obtained information, the data analyzing unit 100b starts the determination of whether or not the small-object flag is set for the target item. Firstly, at Step S6-3, the data analyzing unit 100b determines the sizes of the three sides of the circumscribed cuboid of the item. If the size of each side as well as the total size is equal to or smaller than a specified size (Yes at Step S6-3), then the system control proceeds to Step S6-4, at which the data analyzing unit 100b determines whether or not the weight of the item is equal to or smaller than a specified weight. If the weight of the item is equal to or smaller than the specified weight (Yes at Step S6-4), then the data analyzing unit 100b determines that the target item is a small object; and, at Step S6-5, the data managing unit 100a sets "1" in the small-object flag for the concerned item in the integrated item database.

However, if the size of the item is greater than the specified size (No at Step S6-3) or if the weight of the item is greater than the specified weight (No at Step S6-4); then, at Step S6-6, the data analyzing unit 100b determines that the target item is not a small item, and the data managing unit 100a sets "0" in the small-object flag for the concerned item in the integrated item database.

Then, at Step S6-7, the data analyzing unit 100b starts the determination about a fragile-object flag. Firstly, at Step S6-8, the data analyzing unit 100b confirms whether or not there is any data enabling fragile object determination. Examples of the data enabling fragile object determination include the data of an external database such as a fragile object list, image information of the items that can be classified as fragile objects, and input information received from the users via an external user interface.

If it is determined that there is data enabling fragile object determination (Yes at Step S6-8); then, at Step S6-9, the data analyzing unit 100b determines whether or not the target item is a fragile object. If the data is obtained from outside, the determination can be performed by directly utilizing that data. If primary data such as image information is used, the determination can be performed using a classifier for fragile object determination based on machine learning.

If it is determined at Step S6-9 that the item is a fragile object (Yes at Step S6-9); then, at Step S6-10, the data managing unit 100a sets "1" in the fragile-object flag for the concerned item in the integrated item database. On the other hand, if it is determined at Step S6-9 that the item is not a fragile object (No at Step S6-9); then, at Step S6-11, the data managing unit 100a sets "0" in the fragile-object flag for the concerned item in the integrated item database.

Meanwhile, at Step S6-8, if it is confirmed that the there is no valid data for determination (No at Step S6-8); then, at Step S6-12, the data managing unit 100a sets "NA" in the fragile-object flag for the concerned item in the integrated item database. Herein, NA implies no determination.

Then, at Step S6-13, the data analyzing unit 100b starts the determination of the heavy-object flag. Firstly, at Step S6-14, the data analyzing unit 100b determines the sizes of three sides of the circumscribed cuboid of the item. If the size of each side as well as the total size is equal to or greater than the specified size (Yes at Step S6-14), then the system control proceeds to Step S6-15, at which the data analyzing unit 100b determines whether or not the weight of the item is equal to or greater than the specified weight. If the weight of the item is equal to or greater than the specified weight (Yes at Step S6-15); then, at Step S6-16, the data analyzing unit 100b determines that the target item is a heavy object, and the data managing unit 100a sets "1" in the heavy-object flag for the concerned item in the integrated item database. It marks the end of the operations.

On the other hand, if the size of the item is smaller than the specified size (No at Step S6-14) or if the weight of the item is smaller than the specified weight (No at Step S6-15); then, at Step S6-17, the data analyzing unit 100b determines that the target item is not a heavy object, and the data managing unit 100a sets "0" in the heavy-object flag for the concerned item in the integrated item database. It marks the end of the operations.

In this way, in the robot integrated management system 100, using the item information that is subjected to modelization based on the information obtained from the operations performed in the photographing registration mode and the operations performed in the shape registration mode, the picking robot system 2 sequentially updates the information of the database, thereby enabling achieving automatic enhancement in the processing efficiency.

In this way, in the robot integrated management system 100, the data analyzing unit 100b performs analysis and the operating unit 100c updates the database. Hence, it becomes possible to reload and update the data in the database. As a result, as the operations progress, the processing efficiency of the handling system 1 can go on improving. Moreover, in the explanation given above, the explanation is mainly given about an example in which the handling system 1 automatically generates, reloads, and updates a variety of information of the database. However, alternatively, the handling system 1 can create and update the integrated management database 130 based on the information obtained by direct input of users via the service/UI unit 100d or based on the information obtained from external database via the SoS_API 100f.

### Picking integrated management of post-data-updating handling system

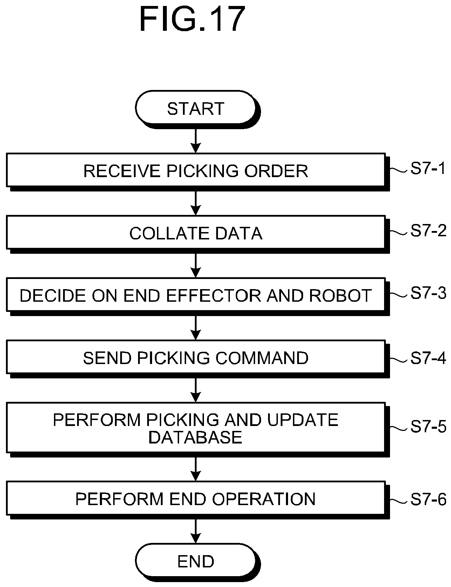

FIG. 17 illustrates a sequence of operations performed by the robot integrated management system 100 to process an item having the "end effector finalization state" in the integrated management database 130.

At Step S7-1, the robot integrated management system 100 receives a picking task instruction from the external system 310, such as a WMS, via the SoS_API 100f.

At Step S7-2, the operating unit 100c collates the received picking task instruction data with the information of the integrated management database 130 managed by the data managing unit 100a. If the item ID specified in the picking task instruction is already registered in the robot integrated management database, then the information of the registered item is checked.

At Step S7-2, if the state in the item data is the "end effector finalization state"; then, at Step S7-3, the data analyzing unit 100b decides on the most suitable end effector 220 for the target item for picking and decides on the picking robot system 2 that includes the most suitable end effector 220.

At Step S7-4, with respect to the controller 201 of the picking robot system 2 decided to be the most suitable, the operating unit 100c sends an instruction to perform picking in the normal mode using the end effector 220 decided to be the most suitable.

At Step S7-5, during the picking task performed by the robot 200, the data managing unit 100a updates the integrated management database 130 according to the picking task. For example, when the picking is performed by combining the grasping surface having the registration state "M" and the end effector 220 and when the grasping is successful, the data managing unit 100a updates the registration state from "M" to "G". Moreover, even when the combination of the grasping surface and the end effector 220 have the compatibility of "capable", if the grasping ends up in failure for a plurality of number of times; the compatibility is updated to "non-capable", and the registration state is set to "C" indicating the reconfirmation is necessary.

At Step S7-6, the robot integrated management system 100 performs an end operation. More particularly, when all ordered picking task instructions are processed, a sweeping instruction for sweeping the container 11b is given to the material handling machinery 250. Moreover, the robot integrated management system 100 notifies the outside about the picking task completion via the data managing unit 100a, the task managing unit 100e, and the SoS_API 100f. Meanwhile, if the picking ends up in failure midway through the picking task, the robot integrated management system 100 notifies the external system 310 about an error via the data managing unit 100a, the task managing unit 100e, and the SoS_API 100f; or notifies the user about an error via the service/UI unit 100d.

### Operations in normal mode

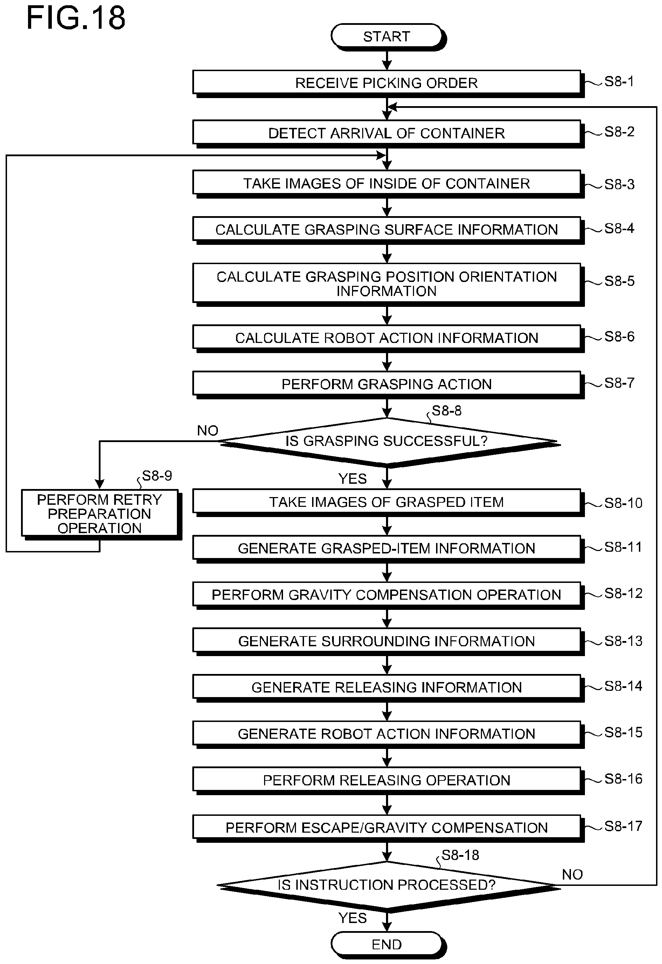

FIG. 18 illustrates a sequence of operations performed in the normal mode of the picking robot system 2.

Firstly, at Step S8-1, the integrating unit 201a receives an item carrying instruction (a picking order) from the external system 310 via an external interface.

At Step S8-2, the integrating unit 201a uses the sensors 230 such as the camera 232a, or uses a photoelectric sensor or a micro switch; and detects the arrival of the container 11a at the grasping position Ph.

At Step S8-3, the integrating unit 201a controls the camera 232a in order to take images of the grasping position Ph of the item and the surrounding area, such as the inside of the container 10a in which the item is housed.

At Step S8-4, from the images taken by the camera 232a, the image processing unit 201b determines the presence or absence of the item and identifies the graspable surfaces of the item. Moreover, the image processing unit 201b calculates grasping surface information such as the shape and the size of the graspable surfaces of the item, and their positions and orientations in the three-dimensional space.

At Step S8-5, based on the grasping surface information, the grasping plan generating unit 201d calculates a plurality of sets of grasping information meant for enabling grasping of the graspable surfaces of the item by the robot 200. The grasping information contains grasping position information and grasping orientation information. Herein, based on the surrounding information of the grasping position Ph such as the objects (surrounding components) other than the concerned item in the container 11a and based on the grasping surface information and the information of the item database; the grasping plan generating unit 201d calculates, for example, additional information, such as the movement direction of the end effectors 220, the severity of the pressing force, and the permissible movement range at the time of performing force control (described later), and adds the additional information to the grasping information.

At Step S8-6, based on the grasping information, the integrating unit 201a selects or decides on the item to be grasped, the grasping position Ph, and the grasping orientation. Then, the motion plan generating unit 201f generates robot action information ranging from the current position of the robot 200 to the grasping position Ph and the grasping orientation. The integrating unit 201a selects faster actions in the areas in which there is no risk or a relatively low probability of interference or collision between the robot 200 and the objects other than the item. On the other hand, for example, the integrating unit 201a selects slower actions in the areas in which there is a risk or a relatively high probability of interference or collision of the end effector 220 or the item with the objects other than the item when the end effector 220 approaches or enters the container 11a. Moreover, the motion plan generating unit 201f decides on the target value of the force to be generated in the end effector 220 within that area.

At Step S8-7, the robot control unit 201g performs operations according to the robot action information and controls the robot 200 and the end effector 220 in order to grasp the item at the grasping position Ph and in the grasping orientation. In the surrounding area of the grasping position Ph of the item, a pressing action for pressing the end effector 220 is performed only with the force control; and, once the suction pads 220a or the fingers 220c have made a sufficient contact with the item, a grasping action such as suction or pinching is performed. In the surrounding area of the grasping position Ph, if the end effector 220 collides with an obstacle such as an object other than the item, then the robot control unit 201g performs a given operation by which, for example, the end effector 220 moves away from the obstacle according to the target value of the force. Moreover, also when the target surface for grasping has an unexpected inclination, the robot control unit 201g performs an operation of making the end effector 220 trace the target surface for grasping using a given pressing method or pressing force.

The robot control unit 201g and the integrating unit 201a monitor the actions of the robot 200 and the grasped state of the item that is grasped by the end effector 220. At Step S8-8, if the grasping of the item by the end effector 220 is successful (Yes at Step S8-8), the system control proceeds to Step S8-10. However, at Step S8-8, if grasping of the item ends up in failure (No at Step S8-8); then the system control proceeds to Step S8-9.

At Step S8-9, the integrating unit 201a performs retraction of the robot 200 or performs a retry preparation operation such as registration of information indicating grasping failure in the item database. After the operation at Step S8-9, the system control returns to Step S8-3.

At Step S8-10, if the orientation of the item to be grasped is not yet finalized, then the robot control unit 201g controls the robot 200 in such a way that the item in the grasped state on account of being grasped by the end effector 220 moves to a photographable position. Then, the integrating unit 201a controls the camera 232b so that the end effector 220 that has grasped the item is photographed at the photographable position.

At Step S8-11, from the images taken by the camera 232a for grasping or the camera 232b for calibration and based on the shape information of the item as registered in the integrated management database 130, the integrating unit 201a obtains the relative position and the relative orientation of the item with respect to the end effector 220.

At Step S8-12, the integrating unit 201a performs a gravity compensation operation such as resetting the force sensor 231. Herein, if the next releasing orientation is already decided, then the integrating unit 201a sets the orientation of the end effector 220 to be same as or close to the releasing orientation, and then performs the gravity compensation operation. As a result, the gravity compensation operation can be performed with high accuracy. At that time, the integrating unit 201a can also measure the weight of the grasped item using the force sensor 231.

At Step S8-13, the integrating unit 201a controls the camera 232b in order to take images of the inside of the container 11b. Then, from the images taken by the camera 232b, the image processing unit 201b determines the presence or absence of other objects, other than the item, at the releasing position Pr and its surrounding; as well as generates surrounding information indicating the sizes, the positions, and the surface positions of the other objects.

At Step S8-14, the releasing plan generating unit 201e refers to the grasped-item information, the grasping database information, and the surrounding information; and generates releasing information containing the releasing method, the releasing position, the releasing orientation, the stopover positions, and the stopover orientation in regard to releasing the item grasped by the robot 200. The releasing plan generating unit 201e can further add, to the releasing information, the pressing direction and the severity of the pressing force of the end effector 220 associated with the force control, and information such as the permissible movement range in the force control.

At Step S8-15, the integrating unit 201a selects the releasing position and the releasing method, and the motion plan generating unit 201f generates robot action information ranging from the current position of the robot 200 to the releasing position orientation thereof. Herein, in the areas in which there is no risk or a relatively low probability of interference or collision of the robot 200 with the surrounding objects, the integrating unit 201a selects as fast actions as possible by taking into account the grasped-item information such as the weight of the grasped item, the information about the grasping database, and the grasping state. On the other hand, for example, the integrating unit 201a selects slower actions in the areas in which there is a risk or a relatively high probability of interference or collision of the end effector 220 or the grasped item with the objects other than the grasped item when the end effector 220 or the grasped item approaches or enters the container 11b. Moreover, based on the releasing information, the integrating unit 201a decides on the target value of the force to be generated in the end effector 220 within that area.

At Step S8-16, the robot control unit 201g performs operations according to the generated robot action information, and controls the robot 200 and the end effector 220 in such a way that the item is released at the releasing position Pr and in the releasing orientation. In order to place the items at a high density in the container 11b, if the wall of the container 11b or a sufficiently large already-placed luggage is present near the arrival position of the item, then a pressing action is performed on the grasped item by the end effector 220. In the surrounding area of the releasing position Pr, if the end effector 220 or the grasped item collides with an unexpected obstacle such as an already-placed object, then the robot control unit 201g performs a given operation by which, for example, the end effector 220 moves away from the obstacle according to the target value of the force. Moreover, also when the target surface for pressing has an unexpected inclination, the robot control unit 201g performs an operation of making the grasped item trace the target surface for pressing, such as the wall of the container 11b, using a given pressing method or pressing force, and performs an operation of releasing the grasped item in the appressed state.

At Step S8-17, after the item is released, the robot control unit 201g controls the end effector 220 to enable it to get out of the container 11b, and controls the robot 200 that takes a standby orientation. At that time, the robot control unit 201g performs gravity compensation such as resetting the detection value of the force sensor 231 (in this state, the detection value is set to "0"). Herein, if the grasping orientation of the next item is already decided, then the robot control unit 201g controls the robot 200 and the end effector 220 in such a way that the end effector 220 has the orientation to be substantially same as or close to the grasping orientation, and then performs gravity compensation in that state.

At Step S8-18, when the integrating unit 201a receives a picking order from the external system 310 for picking the next item (No at Step S8-18), the system control returns to Step S8-2 and the series of control is started with respect to the next item. Meanwhile, at Step S8-18, if the next item is not present (Yes at Step S8-18); then it marks the end of the series of control.

### Online utilization of database in integrated system: end effector selection

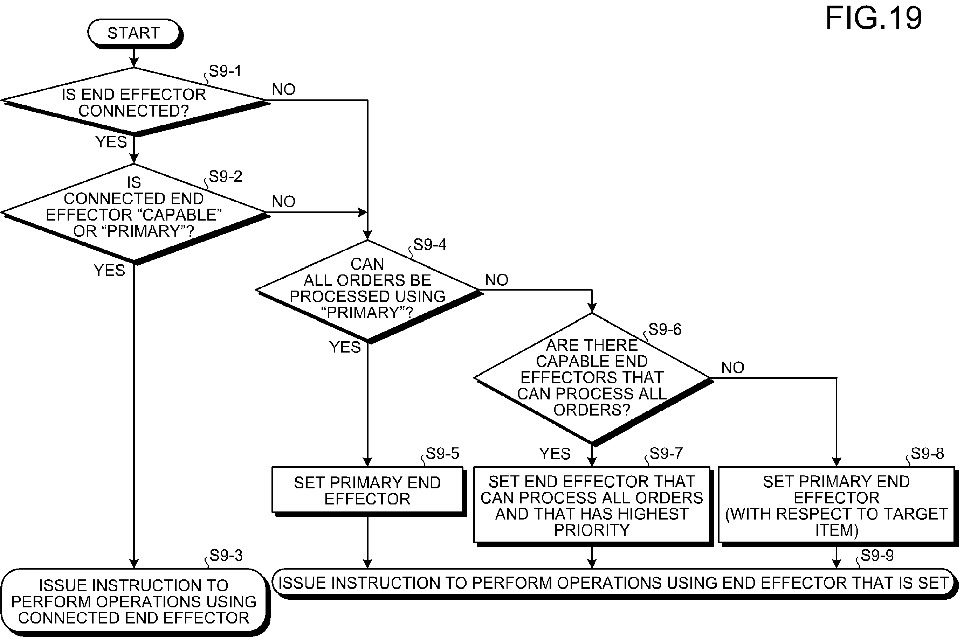

FIG. 19 illustrates a sequence of operations performed by the robot integrated management system 100 for deciding on the most suitable end effector 220. At Step S9-1, the operating unit 100c determines whether or not the robot 200 of the target picking robot system 2 has the end effector 220 connected thereto.

If the robot 200 has the end effector 220 connected thereto (Yes at Step S9-1); then, at Step S9-2, the operating unit 100c confirms whether or not the end effector 220 that is connected to the robot 200 is capable of processing the next target item for processing from among the items specified in the picking order. If the end effector 220 is "primary" or "capable" with respect to the target item, then the operation unit 100c determines that the target item is processible, and gives a picking order to the picking robot system 2 for performing picking using the concerned end effector 220 (Step S9-3).

If it is confirmed that the end effector 220 is not connected to the robot 200 (No at Step S9-1) or if the end effector 220 that is connected to the robot 200 is not "primary" or "capable" (No at Step S9-2), then the system control proceeds to Step S9-4, at which the data analyzing unit 100b firstly picks up, from the end effector information of the integrated item database, the primary end effectors and the capable end effectors with respect to the yet unprocessed items from among the items specified in the picking order. Then, the data analyzing unit 100b determines whether or not there is a primary end effector that is capable of processing all specified items.

At Step S9-4, if it is found out that there is a primary end effector which is capable of processing all specified items (Yes at Step S9-4); then the system control proceeds to Step S9-5, at which the operating unit 100c instructs the picking robot system 2 to establish connection with the end effector 220 determined to be the primary end effector, and confirms the establishment of the connection. Then, the operating unit 100c instructs the picking robot system 2 to perform picking using the concerned end effector 220 (Step S9-9).

On the other hand, at Step S9-4, if it is found out that there is no end effector 220 which is capable of processing all items (No at Step S9-4); then the system control proceeds to Step S9-6, at which the data analyzing unit 100b determines whether or not there are capable end effectors that are capable of processing all unprocessed items from among the items specified in the picking order.

At Step S9-6, if it is found out that there are capable end effectors which are capable of processing all items (Yes at Step S9-6), then the system control proceeds to Step S9-7, at which the operating unit 100c selects, from among the end effectors 220 that are capable of processing all unprocessed items from among the items specified in the picking order, the end effector 220 having the highest priority, such as the end effector 220 determined to be the primary end effector for the highest number of times; and instructs the picking robot system 2 to establish connection with the end effector 220 having the highest priority. Then, the operating unit 100c instructs the picking robot system 2 to perform picking using the concerned end effector 220 (Step S9-9).

At Step S9-7, if it is found out that there is no capable end effector which is capable of processing all items (Yes at Step S9-7), then the system control proceeds to Step S9-8, at which the operating unit 100c instructs the picking robot system 2 to establish connection with the primary end effector 220 for the next target item for processing. Then, the operating unit 100c instructs the picking robot system 2 to perform picking using the concerned end effector 220 (Step S9-9) .

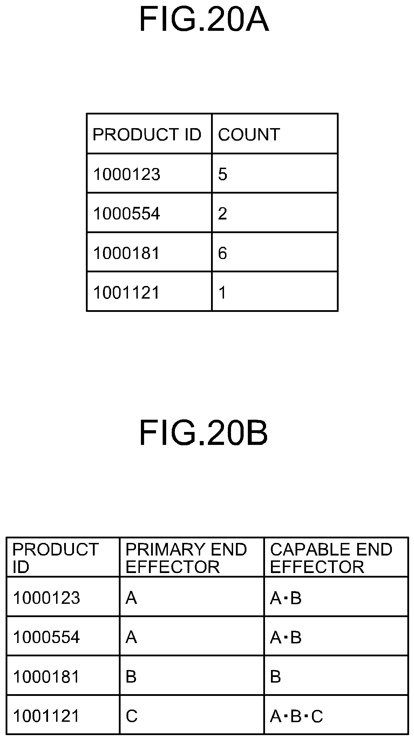

FIG. 20A illustrates an example of the picking order. FIG. 20B illustrates an example of the primary end effectors and the capable end effectors with respect to each unprocessed item from among the items specified in the picking order.

In the state illustrated in FIG. 20B, when the operation at Step S9-4 is performed, since there is no primary end effector that is capable of processing all four types of products, the system control proceeds to Step S9-6 at which the end effector 220 of a type B is determined to be capable of processing (is determined to be "capable" with respect to) all four types of products. In that case, at Steps S9-7 and S9-10, the operating unit 100c instructs the picking robot system 2 to establish connection with the end effector 220 (of the type B), and then instructs the picking robot system 2 to perform picking using the end effector 220 of the type B.

In this way, the robot integrated management system 100 utilizes the information of the integrated item database and switches the end effector 220 to be connected to the picking robot system 2 (the robot 200). Hence, even when a plurality of items is to be processed, operations can be performed with a higher efficiency while keeping the switching count for the end effectors 220 to the minimum.

### Database information utilization in picking robot: grasping action

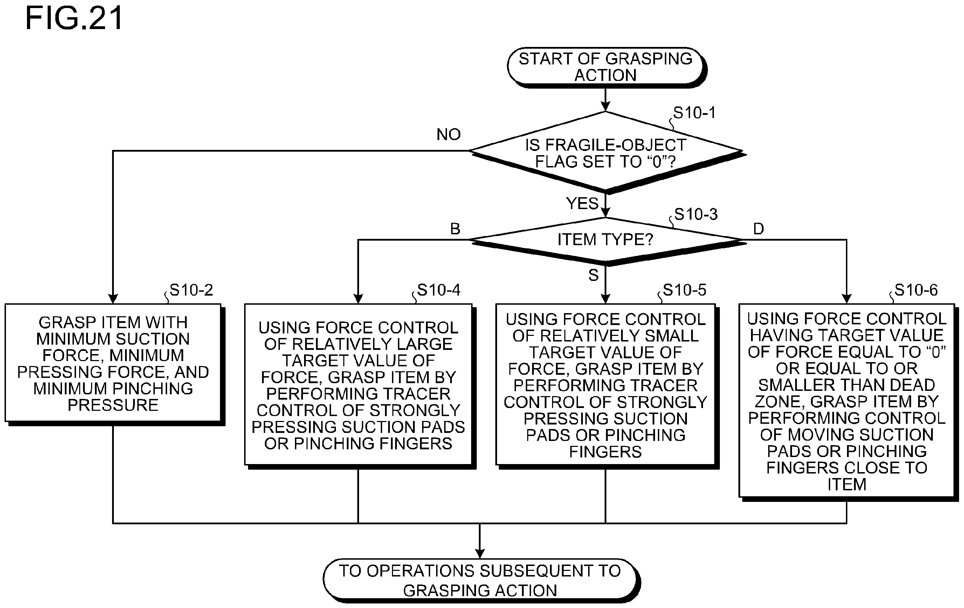

FIG. 21 illustrates a sequence of operations for changing the parameters in the item grasping action, which is performed by the picking robot system 2, by utilizing the database.

At the time of performing an object handling operation such as picking, the picking robot system 2 (the controller 201) refers to the latest information of the integrated item database in the robot integrated management system 100, and updates the internal database 201k in the controller 201. Then, while performing an object handling operation such as picking, the controller 201 utilizes the information of the updated internal database 201k.

At Step S10-1, at the start of the grasping action for grasping the item, the integrating unit 201a determines the fragile-object flag of the target item based on the item information in the internal database 201k.

At Step S10-1, if the fragile-object flag is set to "1" (No at Step S10-1); then, at Step S10-2, the robot control unit 201g controls the suction force by varying the suction pressure; sets the pressing force of the suction pads 220a with respect to the items or sets the pinching pressure, which gets applied when the item is pinched by the fingers 220c, to the minimum value in the graspable range for the item; and continues with the grasping action for grasping the item.

Meanwhile, at Step S10-1, if the fragile-object flag is set to "0" (Yes at Step S10-1); then, at Step S10-3, the integrating unit 201a determines the item type from the information in the internal database 201k.

At Step S10-3, if the item type is determined to be "box (B)", then the system control proceeds to Step S10-4. On the other hand, if the item type is determined to be "solid (S)", then the system control proceeds to Step S10-5. Moreover, if the item type is determined to be "deformable (D)", then the system control proceeds to Step S10-6.

At Step S10-4, the robot control unit 201g sets a relatively large value as the target value for the pressing force of the suction pads 220a with respect to the item or as the target value for the insertion force of the fingers 220c that pinch the item; and continues with the grasping action for grasping the item. That is because, when the item is a box, the placed state of the item is stable; and, even if the end effector 220 is pressed with a certain force, it is unlikely that the concerned item breaks down or the placed items collapse.

At Step S10-5, the robot control unit 201g sets a relatively small value as the target value for the pressing force of the suction pads 220a with respect to the item or as the target value for the insertion force of the fingers 220c that pinch the item, in other words, sets a smaller value than the value set at Step S10-4; and continues with the grasping action for grasping the item. That is because, when the item is a solid, the placed state of the item is not stable; and thus, if the item is pressed with a strong force, the placed items are likely to collapse.

At Step S10-6, the robot control unit 201g sets the target value for the pressing force of the suction pads 220a with respect to the item or the target value for the insertion force of the fingers 220c that pinch the item to nearly zero, and continues with the grasping action for grasping the item. That is because, when the item is deformable, even if the item is pressed with strong force, the effect of pressing is not achieved because of the changes in the shape of the item.

In this way, as a result of utilizing the item type data specified in the database, the picking robot system 2 according to the arrangement becomes capable of performing the object handling operation using more effective parameters. Besides, as a result of using the flag data such as the fragile-object flag, unfavorable situations such as breakage of the items accompanying the handling operation can be prevented from occurring.

### Database information utilization in picking robot: packing operation

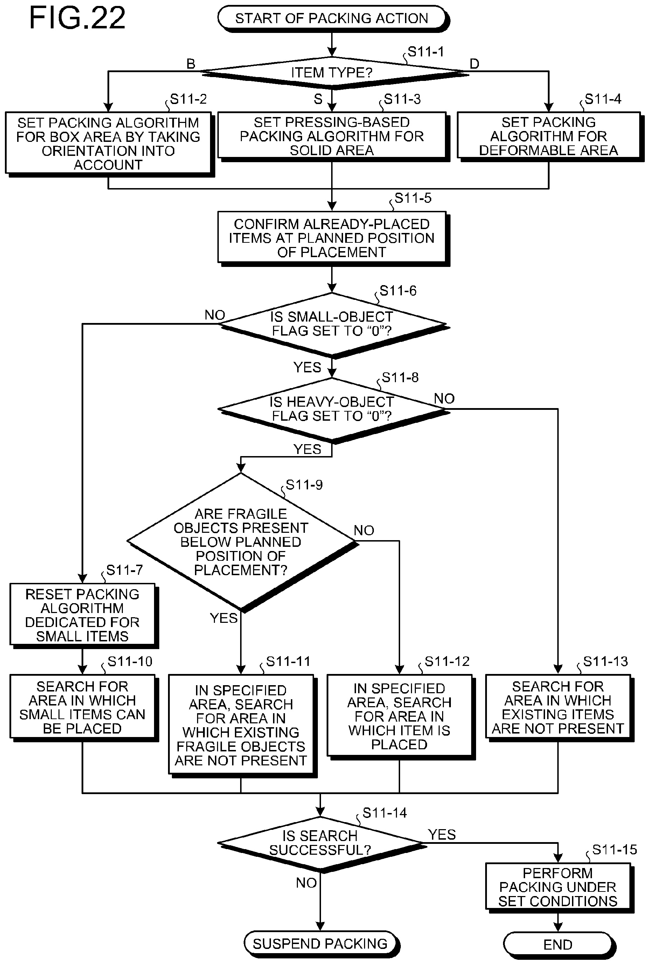

FIG. 22 illustrates a sequence of operations in the packing operation for packing an item, which is performed by the picking robot system 2, by utilizing the database.

At the time of performing an object handling operation such as picking, the picking robot system 2 (the controller 201) refers to the latest information of the integrated item database in the robot integrated management system 100, and updates the internal database 201k in the controller 201. Then, while performing an object handling operation such as packing, the controller 201 utilizes the information of the updated internal database 201k.

At Step S11-1, at the start of the packing operation for packing the item, the integrating unit 201a determines the item type of the target item based on the item information in the internal database 201k.

At Step S11-1, if the item type is determined to be "box", then the system control proceeds to Step S11-2. On the other hand, if the item type is determined to be "solid", then the system control proceeds to Step S11-3. Moreover, if the item type is determined to be "deformable", then the system control proceeds to Step S11-4.

At Step S11-2, the integrating unit 201a sets the parameters of the algorithm meant for packing the item, which is determined to be box shaped, in the container 11b. The algorithm takes into account the fact that the item is box shaped. For example, a packing algorithm such as the BL method is implemented. In that algorithm, a more suitable packing position is calculated, and the item is placed at that packing position using a pressing operation by force control (a first packing mode).

At Step S11-3, the integrating unit 201a sets the parameters of the algorithm meant for packing the item, which is determined to be solid shaped, in the container 11b. The algorithm takes into account the fact that the item is not box shaped. For example, using the circumscribed cuboid information of the item, the packing position of the object is calculated; and the item is placed near that packing position using a pressing operation by force control (a second packing mode).

At Step S11-4, the integrating unit 201a sets the parameters of the algorithm meant for packing the item, which is determined to be deformable, in the container 11b. The algorithm takes into account the fact that the item undergoes a change in the shape. For example, using the circumscribed cuboid information of the item, the packing position within which the object fits is calculated; and the item is placed at that packing position by performing position control which is not based on force control and which ensures that no force is applied at the packing position and the surrounding thereof (a third packing mode).

The pressing force in the third packing mode is weaker than the pressing force in the second packing mode, and the pressing force in the second packing mode is weaker than the pressing force in the first packing mode. The difference in the pressing forces leads to a difference in the acceleration of the item that is moved. Hence, the acceleration attained at the time of arrival of the item at the end point of transportation in the third packing mode is lower than the acceleration attained at the time of arrival of the item at the end point of transportation in the second packing mode. Moreover, the acceleration attained at the time of arrival of the item at the end point of transportation in the second packing mode is lower than the acceleration attained at the time of arrival of the item at the end point of transportation in the first packing mode.

At Step S11-5, the integrating unit 201a recognizes the presence or absence of the already-placed items in the container 11b and, if any items are already placed, obtains the position information and the orientation information of the already-placed items. Such position information and orientation information is called existing-item information.

At Step S11-6, from the item information specified in the internal database 201k, the integrating unit 201a determines about the small-object flag regarding the item to be packed. If the small-object flag is set to "1" (No at Step S11-6), the system control proceeds to Step S11-7. On the other hand, if the small-object flag is set to "0" (Yes at Step S11-6), then the system control proceeds to Step S11-8.

At Step S11-7, the integrating unit 201a overwrites the information that is stored in a given memory area at Step S11-2, or Step S11-3, or Step S11-4 with the information meant for the packing operation dedicated to small items.

At Step S11-10, based on the information overwritten at Step S11-7, the integrating unit 201a searches for an area in which small items can be placed. Herein, a search based on the information exclusive for small items implies, regarding the items having the small-object flag set to "1", a search performed under the condition that, even if the item type is "box", the items can be placed on top of existing items in the deformable area.

At Step S11-8, from the item information specified in an internal database 401k, the integrating unit 201a determines about the heavy-object flag of the target item. If the heavy-object flag is set to "0" (Yes at Step S11-8), then the system control proceeds to Step S11-9. On the other hand, if the heavy-object flag is equal to "1" (No at Step S1-8), then the system control proceeds to Step S11-13.

At Step S11-9, the integrating unit 201a refers to the existing-item information and confirms whether or not any fragile object is present among the existing items. If a fragile object is present (Yes at Step S11-9), then the system control proceeds to Step S11-11. On the other hand, if no fragile object is present (No at Step S11-9), then the system control proceeds to Step S11-12.

At Step S11-11, of the area specified at Step S11-2, Step S11-3, or Step S11-4, in the area that does not come in contact with fragile objects; the integrating unit 201a searches for the position of placement of the concerned item by implementing the specified packing algorithm. The operation at Step S11-11 is performed to ensure that there is no breakage of existing fragile objects due to the placement of the concerned item on top of the fragile objects or due to pushing of the fragile objects by the concerned item.

At Step S11-12, with respect to the area specified at Step S11-2, or Step S11-3, or Step S11-4; the integrating unit 201a searches for the position of placement of the item by implementing the specified packing algorithm.

At Step S11-13, of the area specified at Step S11-2, Step S11-3, or Step S11-4, in the area in which existing items are not present; the integrating unit 201a searches for the placement of the item by implementing the specified packing algorithm. The operation at Step S11-13 is performed to ensure that there is no damage to the existing items due to the placement of a heavy item on top of the existing items.

At Step S11-14, the integrating unit 201a confirms about the success or failure of the search performed at Step S11-10, or Step S11-11, or Step S11-12, or Step S11-13. If the search is successful and the position of placement of the item is decided (Yes at Step S11-14), then the system control proceeds to Step S11-15. On the other hand, if the search ends up in failure and the position of placement of the item is not decided (No at Step S11-14), then the packing operation is temporarily suspended and the next operation, such as changing the container 11b, is performed.

At Step S11-15, the integrating unit 201a uses the parameters suitable for each item set at Step S11-2, or Step S11-3, or Step S11-4, or Step S11-7; and packs the item at the retrieved position of placement. It marks the end of the packing operation.

In this way, as a result of utilizing the item type data specified in the database, the picking robot system 2 according to the arrangement becomes capable of performing the object handling operation using more effective parameters. Besides, as a result of using the flag data such as the fragile-object flag, unfavorable situations such as breakage of the items accompanying the handling operation can be prevented from occurring.

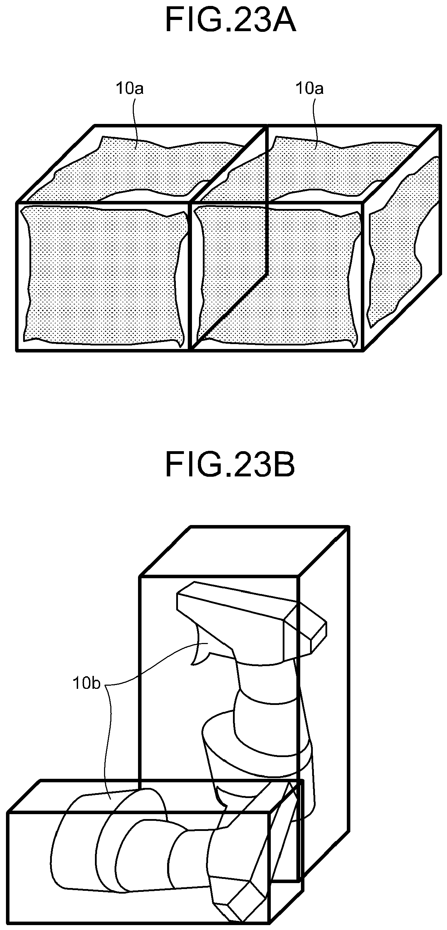

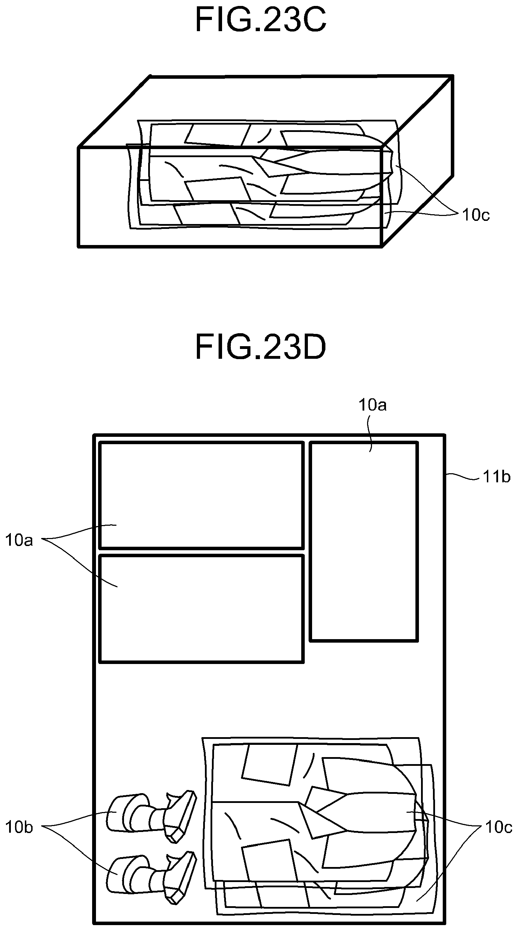

In FIG. 23A are illustrated items 10a such as cardboard boxes or pasteboard boxes that have the item type "box". In FIG. 23B are illustrated items 10b such as liquid containers or blister packs that have the item type "solid". In FIG. 23C are illustrated items 10c such as articles of clothing or refillable containers that have the item type "deformable".

FIG. 23D illustrates a planar view of the container 11b in which packing is performed by the picking robot system 2 according to the flow illustrated in FIG. 22. As illustrated in FIG. 23D, in the container 11b, the items 10a illustrated in FIG. 23A, the items 10b illustrated in FIG. 23B, and the items 10c illustrated in FIG. 23C are respectively placed together at mutually different positions without interfering with other types of items. In this way, in the handling system according to the arrangement, as a result of performing the packing operation by utilizing the information related to the characteristics of the items, it becomes possible to perform packing in a more efficient manner.

### Offline utilization of database in integrated system: site improvement prediction

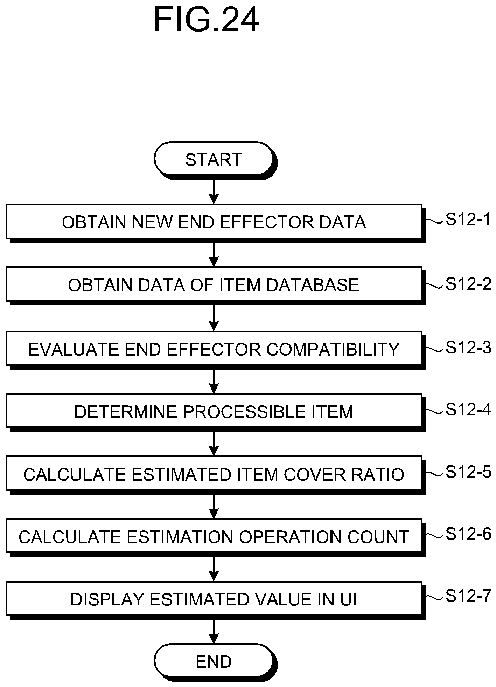

FIG. 24 illustrates a sequence of operations performed in a logistic system site improvement operation. At Step S12-1, the data managing unit 100a updates the integrated management database 130 using new robot data and new end effector data obtained via the CAE function of the task managing unit 100e. Then, the data analyzing unit 100b obtains the new robot data and the new end effector data.

At Step S12-2, the data analyzing unit 100b obtains the necessary item information of the integrated item database that is required in performing compatibility evaluation of the end effectors 220.

At Step S12-3, the data analyzing unit 100b refers to the item information and the end effector data; evaluates the compatibility of the new end effectors 220 and a plurality of items registered in the integrated item database; and, in an identical manner to the case illustrated in FIG. 14B, updates the end effector information table of the integrated item database for each item.

At Step S12-4, the data analyzing unit 100b refers to the updated end effector information table and determines whether or not each registered item is processible. In that case, regarding a plurality of grasping surfaces, if there is at least one surface determined to be "primary" or "capable", then the corresponding item can be determined to be a processible item, or the ratio of the number of processible grasping surfaces with respect to the total number of grasping surfaces can be treated as the determination result.

At Step S12-5, based on the determination result obtained at Step S12-4, from among the items registered in the database or from among the items handled during a specified period of time such as during the concerned day or during the previous one year in the database of the operation status, the data analyzing unit 100b counts the number of items determined to be processible using the new end effectors 220 and the number of items determined to be non-processible using the new end effectors 220; and calculates the ratio of the processible items using the new end effectors 220 with respect to the total item count. This ratio is called an estimated item cover ratio.

At Step S12-6, the data analyzing unit 100b compares the estimated item cover ratio for the new end effectors 220 with the estimated item cover ratio for the existing end effectors 220, and calculates the rate of improvement of the processible item ratio at the time when the new end effectors 220 were introduced.

At Step S12-7, the service/UI unit 100d displays the result calculated at Step S12-5 or Step S12-6 in a user interface (a display unit) such as a display. Moreover, the SoS_API 100f notifies the external system 310 or the upper management system 320 about the result calculated at Step S12-5 or Step S12-6. It marks the end of the operations.

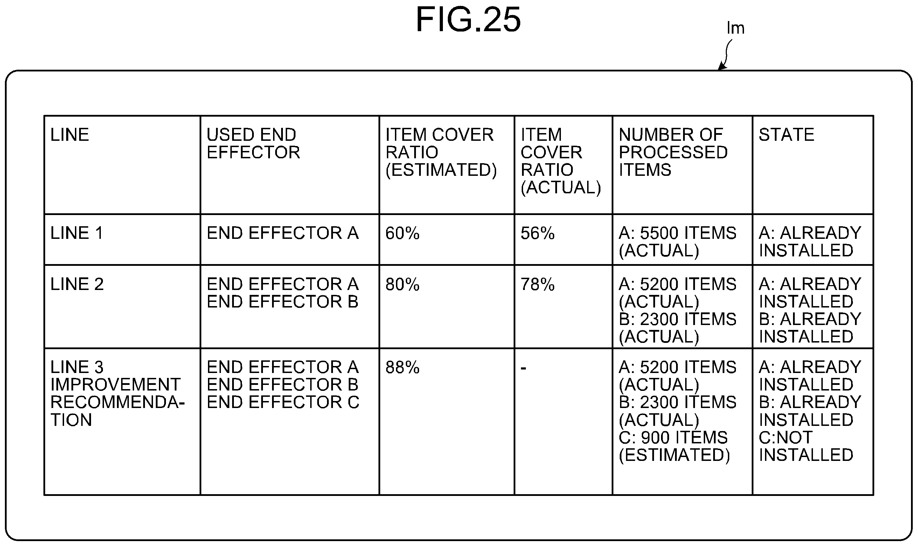

FIG. 25 illustrates a display example that is displayed as a logistics system improvement proposal function in the UI. As illustrated in FIG. 25, in an image Im is illustrated the result of a logistics system improvement proposal function operation performed with respect to an end effector C representing a new end effector 220. In the table illustrated in the image Im, the first column indicates the processing lines in which the handling system 1 is performing the processing, and the second column indicates the end effectors 220 that are selected by the object handling robot used in the respective lines. Herein, in line 1, it can be understood that the robot 200 that is able to select an end effector A is placed. In an identical manner, in line 2, it can be understood that the picking robot system 2 (the robot 200) that is able to switch between and select end effectors A and B is placed.

Moreover, the third column in the table indicates the estimated value of the ratio of the processible items with respect to the items flowing in each line estimated by the data analyzing unit 100b of the robot integrated management system 100. The fourth column indicates the actual value of the ratio of success of the processing from the operation status of the items flowing in the actual line. The difference between the third column and the fourth column represents the difference between estimation and actual performance.

Furthermore, the fifth column in the table indicates the number of processed items that were actually processed, and the sixth column indicates the placement status of the end effectors in each line. Moreover, the fourth row indicates the processing result of the logistics system improvement proposal function when the end effector C is newly introduced in the line 2. From that result, it can be understood that, when the end effector C is introduced in the line 2, the ratio of the automatically-processible items increases from the current percentage of 80% to about 88%. Moreover, it can be understood that the number of items that are actually processed using the end effector C is estimated to be 900.

In this way, in the handling system 1, as a result of implementation of the logistics system improvement proposal function by the robot integrated management system 100, the effect of introducing the new end effectors 220 can be estimated before the actual introduction thereof. Moreover, as a result of displaying the result in the UI, the communication with the customers can be performed in an effective manner.

As described above, according to the arrangement, in the handling system 1, even when there is no data of a new item (the object 10), that item can be automatically measured and analyzed and can be processed in a more suitable manner.

Moreover, according to the arrangement, in the handling system 1, as a result of performing the operations in the shape registration mode (the second mode) in which the measurement of the item is performed while grasping the item, the changes in the actual state of the item that occur due to grasping can be measured, thereby making it easier to process the item more suitably or more accurately.

Furthermore, according to the arrangement, in the handling system 1, as a result of performing the operations in the shape registration mode in which the measurement is done while transporting the item, it becomes possible to measure the actual changes in the state of the item that are attributed to the transportation. Hence, not only it becomes easier to process the item more suitably and more accurately, but the throughput can also be increased as compared to the system in which the item is measured without transporting it.

Moreover, according to the first arrangement, the data analyzing unit 100b can classify the item according to the deformability, such as according to the deformation volume with respect to the external force of given severity; and can perform packing according to the classification. Hence, for example, the items can be housed with lesser damage in the container 11b thereby enabling achieving a housed state with less inconvenience.

Furthermore, according to the arrangement, the data analyzing unit 100b can classify the item according to the external shape, such as whether or not the item is substantially cuboid or whether or not the outer surface of the item fits in a given area having substantially cuboid shape; and can perform packing according to the classification. Hence, for example, the items can be housed with a higher density in the container 11b with less convenience.

Moreover, in the arrangement, the robot integrated management system 100 (the robot management system) is shared among a plurality of picking robot systems (robot systems). Hence, as compared to the system in which measurement and analysis of items is performed in each picking robot system 2; it becomes possible to achieve the handling system 1 having a higher processing efficiency.

In the arrangement, each of the robot integrated management system 100, the master device 110, the slave devices 120, and the controller 201 is configured using one or more computers. In each of the robot integrated management system 100, the master device 110, the slave devices 120, and the controller 201; the arithmetic processing and the control can be implemented using either software or hardware. Alternatively, in each of the robot integrated management system 100, the master device 110, the slave devices 120, and the controller 201; the arithmetic processing and the control can be performed using a combination of software and hardware.

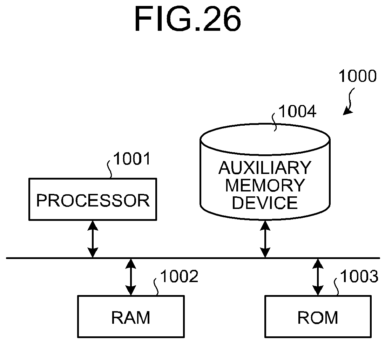

When the processing is performed using software, each of the robot integrated management system 100, the master device 110, the slave devices 120, and the controller 201 is configured using a computer 1000 illustrated in FIG. 26. The computer 1000 at least includes a processor 1001 (circuitry), a random access memory (RAM) 1002, a read only memory (ROM) 1003, and an auxiliary memory device 1004 such as a hard disk drive (HDD) or a solid state drive (SSD). The processor 1001 reads computer programs (applications) from the ROM 1003 or the auxiliary memory device 1004, and executes them. The processor 1001 performs operations according to the computer programs, and thus functions as the functional blocks in each of the robot integrated management system 100, the master device 110, the slave devices 120, and the controller 201. In that case, the computer programs include program modules corresponding to the functional blocks.

The computer programs can be recorded as installable files or executable files in a recording medium such as a compact disk read only memory (CD-ROM), a flexible disk (FD), a compact disk recordable (CD-R), a digital versatile disk (DVD), or a universal serial bus (USB) memory that is readable in the computer 1000. The recording medium can be called a computer program product. Alternatively, the computer programs can be stored in a downloadable manner in a computer connected to a communication network, and can be downloaded in the computer 1000 via the communication network. Still alternatively, the computer programs can be stored in advance in the ROM 1003.

When at least some part of the computer 1000 is configured using hardware, for example, the computer 1000 can include a field programmable gate array (FPGA) or an application specific integrated circuit (ASIC).

Meanwhile, although not illustrated, the computer 1000 can be connected to an external interface and various UI devices for use.

In the robot integrated management system 100 according to the arrangement, the master device 110 functions as the data managing unit 100a, the data analyzing unit 100b, the service/UI unit 100d, the task managing unit 100e, and the SoS_API 100f; and the slave devices 120 function as the operating unit 100c. However, the segmentalization of the functions in the robot integrated management system 100 is not limited to this form. Meanwhile, the robot integrated management system 100 can be configured using a single computer or using three of more computers.

While certain arrangements have been described, these arrangements have been presented by way of example only, and are not intended to limit the scope of the claims. Indeed, the novel arrangements described herein may be embodied in a variety of other forms; furthermore, various omissions, substitutions and changes in the form of the arrangements described herein may be made. The accompanying claims and their equivalents are intended to cover such forms or modifications. Moreover, regarding the constituent elements, the specifications about the configurations and the shapes (structure, type, direction, shape, size, length, width, thickness, height, number, arrangement, position, material, etc.) can be suitably modified. For example, the handling system described above can be uses in handling systems other than an object handling system in which objects are carried from one container into another container.

While certain arrangements have been described, these arrangements have been presented by way of example only, and are not intended to limit the scope of the claims. Indeed, the novel arrangements described herein may be embodied in a variety of other forms; furthermore, various omissions, substitutions and changes in the form of the systems described herein may be made.
Example 1. A handling system includes a robot system, a data analyzing unit, a database, and an operation instructing unit.
   The robot system includes a robot having a movable part, includes an end effector which grasps an object attached to the movable part, and which moves the object in a grasped state, includes a sensor which measures the object, and is capable of processing the object in a plurality of operation modes.
   The data analyzing unit analyzes first-type data of the object obtained by the sensor by measuring the object, and calculates second-type data of the object.
   The database that is used to store the second-type data of the object in a corresponding manner to a state of data of the object, which is decided according to an operation mode of the robot system at a time of obtaining the first-type data of the object.
   The operation instructing unit that, with respect to the robot system which processes the object, gives an operation instruction to process the object according to an action command decided according to the second-type data of the object in the operation mode decided according to the state of the object stored in the database.
Example 2. In the handing system according to example 1, the plurality of modes include:
   a first mode in which the sensor measures the object that is not grasped by the end effector, and
   a second mode in which the sensor measures the object that is grasped by the end effector, or
   a third mode in which the robot transports the object.
Example 3. In the handing system according to example 2,
   when the first-type data of the object is obtained in the first mode, the state of the object is set to a first state,
   when the first-type data of the object is obtained in the second mode, the state of the object is set to a second state,
   when the state of the object stored in the database is the first state, the operation instructing unit gives the operation instruction to process the object in the second mode, and
   when the state of the object stored in the database is the second state, the operation instructing unit gives the operation instruction to process the object in the third mode.
Example 4. In the handling system according to example 2 or 3, in the second mode, the robot transports the object that is grasped by the end effector.
Example 5.In the handling system according to example 4, a transportation velocity of the object in the second mode is slower than a transportation velocity of the object in the third mode.
Example 6.In the handling system according to any one of examples 1 to 5, the data analyzing unit performs classification of the object according to a deformation volume against external force.
Example 7.In the handling system according to example 6, the data analyzing unit performs classification of the object according to an external shape.
Example 8.In the handling system according to example 6 or 7, the robot transports the object in such a way that objects of a same classification are collected together.
Example 9.In the handling system according to any one of examples 6 to 8, the robot is capable of varying acceleration at a time of arrival at an end point of transportation of the object, and the action command is set in such a way that the acceleration or a control target value related to the acceleration varies according to the classification.
Example 10. In the handling system according to any one of examples 6 to 9, a plurality of robots having different end effectors are connected, and by the action command, a certain robot is specified according to the second-type data.
Example 11. In the handling system according to any one of examples 6 to 10, in the robot, a plurality of the end effectors is replaceable, and by the action command, the end effector selected according to the classification is specified.
Example 12. In the handling system according to any one of examples 1 to 11, based on specifications data of a first-type end effector representing the end effector not used for the object and based on specifications data and operation record data of a second-type end effector representing the end effector already used for the object, the data analyzing unit predicts an operation record of the first-type end effector.
Example 13. A robot management system, which is included in the handling system according to any one of examples 1 to 12, includes the data analyzing unit and the operation instruction unit.
Example 14. In the robot management system according to example 13, the robot management system further includes the database.
Example 15. In the robot management system according to example 13 or 14, the robot management system controls a plurality of the robot systems.
Example 16. A robot system, which is included in the handling system according to any one of examples 1 to 12, includes the robot and the sensor.
Example 17. A robot system includes a robot and a sensor. The robot has a movable part, that includes an end effector which grasps an object attached to the movable part, and that moves the object in a grasped state. The sensor measures the object. The robot system is operable in a second mode in which the robot transports the object while the sensor measures the object that is grasped by the end effector, and in a third mode in which the robot transports the object at a faster velocity than in the second mode.
Example 18. In the robot system according to example 17, the robot system is operable in a first mode in which the sensor measures the object that is not grasped by the end effector.

## Claims

1. A handling system (1) comprising:
a robot system (2) that
includes a robot (200) having a movable part (210), includes an end effector (220) which grasps an object attached to the movable part, and which moves the object in a grasped state,
includes a sensor which measures the object, and
is capable of processing the object in a plurality of operation modes;
a data analyzing unit (100b) that analyzes first-type data of the object obtained by the sensor by measuring the object, and calculates second-type data of the object;
a database (130) that is used to store the second-type data of the object in a corresponding manner to a state of data of the object, which is decided according to an operation mode of the robot system at a time of obtaining the first-type data of the object; and
an operation instructing unit (100c) that, with respect to the robot system which processes the object, gives an operation instruction to process the object according to an action command decided according to the second-type data of the object in the operation mode decided according to the state of the object stored in the database.

2. The handing system according to claim 1, wherein the plurality of modes include:
a first mode in which the sensor measures the object that is not grasped by the end effector, and
a second mode in which the sensor measures the object that is grasped by the end effector, or
a third mode in which the robot transports the object.

3. The handing system according to claim 2, wherein
when the first-type data of the object is obtained in the first mode, the state of the object is set to a first state,
when the first-type data of the object is obtained in the second mode, the state of the object is set to a second state,
when the state of the object stored in the database is the first state, the operation instructing unit gives the operation instruction to process the object in the second mode, and
when the state of the object stored in the database is the second state, the operation instructing unit gives the operation instruction to process the object in the third mode.

4. The handling system according to claim 2 or 3, wherein, in the second mode, the robot transports the object that is grasped by the end effector.

5. The handling system according to claim 4, wherein a transportation velocity of the object in the second mode is slower than a transportation velocity of the object in the third mode.

6. The handling system according to any one of claims 1 to 5, wherein the data analyzing unit performs classification of the object according to a deformation volume against external force.

7. The handling system according to claim 6, wherein the data analyzing unit performs classification of the object according to an external shape.

8. The handling system according to claim 6 or 7, wherein the robot transports the object in such a way that objects of a same classification are collected together.

9. The handling system according to any one of claims 6 to 8, wherein
the robot is capable of varying acceleration at a time of arrival at an end point of transportation of the object, and
the action command is set in such a way that the acceleration or a control target value related to the acceleration varies according to the classification.

10. The handling system according to any one of claims 6 to 9, wherein
a plurality of robots having different end effectors are connected, and
by the action command, a certain robot is specified according to the second-type data.

11. The handling system according to any one of claims 6 to 10, wherein
in the robot, a plurality of the end effectors is replaceable, and
by the action command, the end effector selected according to the classification is specified.

12. The handling system according to any one of claims 1 to 11, wherein, based on specifications data of a first-type end effector representing the end effector not used for the object and based on specifications data and operation record data of a second-type end effector representing the end effector already used for the object, the data analyzing unit predicts an operation record of the first-type end effector.

13. The handling system according to any one of claims 1 to 12, further comprising:
a robot management system (100) that includes the data analyzing unit and the operation instruction unit.

14. The handling system according to claim 13, wherein the robot management system controls a plurality of robot systems.

15. A handling method (1) comprising:
processing an object in a plurality of operation modes by a robot system (2) including a robot (200) having a movable part (210), and an end effector (220) which grasps the object attached to the movable part and which moves the object in a grasped state, and including a sensor which measures the object;
analyzing first-type data of the object obtained by the sensor by measuring the object, and calculating second-type data of the object;
storing in a database (130) the second-type data of the object in a corresponding manner to a state of data of the object, which is decided according to an operation mode of the robot system at a time of obtaining the first-type data of the object; and
with respect to the robot system which processes the object, giving an operation instruction to process the object according to an action command decided according to the second-type data of the object in the operation mode decided according to the state of the object stored in the database.
